# EUROPEAN PATENT SPECIFICATION

(11) **EP 2 864 415 B1**
(45) Date of publication and mention of the grant of the patent: **28.09.2016**
(21) Application number: 13728411.3
(22) Date of filing: 14.06.2013
(51) Int. Cl.: C08L 27/12, C08L 27/18, C09D 7/00

(54) **FLUOROPOLYMER COMPOSITION**
FLUORPOLYMERZUSAMMENSETZUNG
COMPOSITION DE FLUOROPOLYMÈRE

(30) Priority: 26.06.2012 EP 12173575
(43) Date of publication of application: 29.04.2015
(73) Proprietor: Solvay Specialty Polymers Italy S.p.A., 20021 Bollate (MI) (IT)
(72) Inventor: POLASTRI, Fabio, I-20052 Monza (IT); DENINNO, Liliana, I-22070 Limido Comasco (IT)
(74) Representative: Benvenuti, Federica
(86) International application number: PCT/EP2013/062348
(87) International publication number: WO 2014/001100

(56) References cited:
- EP-A1- 1 103 582
- EP-A2- 0 343 015
- WO-A1-99/47615
- US-A1- 2002 150 778
- Anonymous: "Use of blends of the new diester Rhodiasolv IRIS and dimethyl sulphoxide(DMSO) in order to replace solvents with bad HSE profiles such as N-methylpyrrolidone (NMP), dimethyl formamide (DMF), dimethyl acetamide (DMAC) invarious applications", IP.com Prior Art Database Disclosure IPCOM000202891D , 7 January 2011 (2011-01-07), XP002683025, Retrieved from the Internet: URL:http://ip.com/IPCOM/000202891 [retrieved on 2012-09-07]
- Rhodia (Slovay): "SUSTAINABLE SOLVENTS PRODUCTS AND PROCESS INNOVATIONS", The Royal Society of Chemistry Symposium 2012 , 14 June 2012 (2012-06-14), pages 1-24, XP002683007, Retrieved from the Internet: URL:http://www.chemspecevents.com/europe/i mages/uploads/chemsource/14-3_Thierry_Vida l_final_final_version.pdf [retrieved on 2012-09-07]

## Description

### Cross-reference to related application

### Technical Field

The present invention relates to a fluoropolymer composition suitable for adhering a fluoropolymer coating onto a surface, in particular onto a metal surface, and a method for coating a surface, specifically a metal surface,
with a fluoropolymer, using said fluoropolymer composition.

### Background Art

Because of its excellent properties in chemical resistance, heat resistance, non-stickiness, fluoropolymers are used as preferred coating materials for different surfaces, including notably metal surfaces, for example, in applications which include linings for chemical units, which are required to be corrosion resistant; linings for rice cookers, and cooking utensils that are required to be corrosion resistant and non-sticky.

However, the excellent non-stickiness inherent properties of fluoropolymer also often results in insufficient adhesion to substrate surfaces, in particular to metal surfaces, and a variety of solutions have been developed up to now for improving such adhesion.

More particularly, thermoplastic fluoropolymers which are known for possessing film-forming properties, such as
tetrafluoroethylene/perfluoroalkyl vinyl ether copolymers (PFA), tetrafluoroethylene/hexafluoropropylene copolymers (FEP), ethylene/tetrafluoroethylene (ETFE) and ethylene/chlorotrifluoroethylene (ECTFE) polymers, are capable of exhibiting fluidity at or above their melting points and of adhering to metals with an adhesion strength too weak to be of any practical use. Thus, the conventional approach has been to chemically or physically roughen the metal surface, followed by a thermal fusion or adhering with the intermediary of an adhesive layer (also called primer) between the outmost fluoropolymer layer and the metal, which also has to possess outstanding adhesion properties towards additional top-coat (outer) layers made from fluoropolymers.

For conferring appropriate adhesive properties, primer compositions which have been suggested in the past, typically comprise certain aromatic polymers, including notably polyamideimide (PAI), polyimides (PI), sulfone polymer (SP).

In order to ensure optimized mixing between these components, it is current practice mixing the fluoropolymer and the aromatic polymer in an organic solvent, typically in N-methylpyrrolidone (NMP), possibly in admixture with other solvents.

Thus, EP 0789728 A (E.I. DUPONT DE NEMOURS) 9/2/1998 discloses a primer composition comprising notably a polyether sulfone, a polyamideimide and/or a polyimide, a fluororesin and an organic solvent. N-methylpyrrolidone and its mixtures are the sole solvents which are mentioned and exemplified.

Similarly, US 5626907 (E.I. DUPONT DE NEMOURS) 5/6/1997 discloses a primer composition comprising notably a fluororesin, a polyether sulfone polymer, at least one polymer selected from a polyimide and a polyamideimide, solubilized or dispersed in an organic solvent.This document teaches that the organic solvents which can be used include N-methylpyrrolidone either alone or in admixture with other solvents, like diacetone alcohol or xylene.

Document WO99/47615 discloses a composition comprising a plurality of multicomponent particles, one component of each of the particles being a melt fabricable fluoropolymer and another component of each of the particles being a high temperature resistant polymer binder, said composition being provided in the form of a free-flowing powder and said multicomponent particles being manufactured by combining fluoropolymer particles with a solution of polymer binder in a solvent such as NMP, dimethylformamide, dimethylacetamide, dimethylsulfoxide, cresylic acid, sulfolane and formamide.

Document "Use of blends of the new diester Rhodiasolv IRIS and dimethylsulfoxide (DMSO) in order to replace solvents with bad HSE profiles such as N-methylpyrrolidone (NMP), dimethyl formamide (DMF), dimethylacetamide (DMAC) in various applications ", IP.com Prior Art Database Disclosure IPCOM000202891D (07/01/2011) discloses that a mixture of diester dimethyl 2-methylglutarate (IRIS) and DMSO, teaches solubility parameters of mixture of IRIS/DMSO, and stipulates that the said parameters are "very close" to those of NMP. This document further cites certain specific fields of use, wherein the said solubilisation properties can be find use, i.e. solubilisation of PVDF resins, polyamide-imide solubilisation,

Nevertheless, the use of NMP is attracting more and more concerns, having regards to the safety risks associated to its handling and to possible leakage/emissions in the environment. NMP has been notably classified according to the European regulation (EC) No1272/2008 in the hazard class Repr.1B code H360D (may damage the unburned child), Eye Irrit.2 code H319, STOT SE 3 code H335, Skin Irrit.2 H315 and according to the European directive 67/548/EEC it is classified as Reprotoxic Cat2 code R61, Xi codes R36/37/38. Further more it is submitted to the Toxic Release Inventory (SARA Title III Section 313).

The present invention thus provides a solution for obviating to environmental and safety concerns which arise in using NMP or other similar solvents.

### Summary of invention

The invention thus pertains to a fluoropolymer composition comprising:
- at least one fluoropolymer [polymer (A)];
- at least one aromatic polycondensation polymer [polymer (P)];
- a solvent mixture [mixture (M)] comprising dimethylsulfoxide (DMSO) and at least one solvent selected from the group consisting of diesters of formula (I_{de}) and ester-amide of formula (Iₑₐ):

   R¹-OOC-A_{de}-COO-R² (I_{de})

   R¹-OOC-Aₑₐ-CO-NR³R⁴ (Iₑₐ)

   wherein:
   - R¹ and R², equal to or different from each other, are independently selected from the group consisting of C₁-C₂₀ hydrocarbon groups;
   - R³ and R⁴, equal to or different from each other, are independently selected from the group consisting of hydrogen, C₁-C₃₆ hydrocarbon groups, possibly substituted, being understood that R³ and R⁴ might be part of a cyclic moiety including the nitrogen atom to which they are bound, said cyclic moiety being possibly substituted and/or possibly comprising one or more than one additional heteroatom, and mixtures thereof;
   - A_{de} and Aₑₐ, equal to or different from each other, are independently a linear or branched divalent alkylene group.

The Applicant has found that the particular combination of DMSO and at least one of the diester (I_{de}) and of the ester-amide (Iₑₐ) as above detailed is a solvent mixture which, in addition of possessing a totally positive environmental profile, with no environmental nor toxicological concerns, is effective in providing fluoropolymer compositions which possess outstanding adhesion propertied towards substrates, including metal substrates, and towards top-coat additional fluoropolymer layers.

The mixture (M) can comprise, in addition to DMSO, a mixture of more than one diester of formula (I_{de}), a mixture of more than one esteramide of formula (Iₑₐ), or can comprise a mixture of one or more than one diester (I _{de}) and one or more than one esteramide (Iₑₐ). The Applicant thinks, without being bound by this theory, that the use of mixtures of one ore more diesters (Iₑₐ) and/or one of more esteramides (Iₑₐ) can provide improved drying properties for the composition.

In formulae (I_{de}) and (Iₑₐ), R¹ and R², equal to or different from each other, are preferably selected from the group consisting of C₁-C₂₀ alkyl, C₁ -C₂₀ aryl, C₁-C₂₀ alkyaryl, C₁-C₂₀ arylalkyl groups, and mixtures thereof.

With regards to the expression "C₁-C₂₀ alkyl" used in formulae (I_{de}) and (I ₐₑ) is used according to its usual meaning and it encompasses notably linear, cyclic, branched saturated hydrocarbon chain having from 1 to 20 carbon atoms and preferably from 1 or 2 to 10 carbon atoms.

Similarly, the expression "C₁-C₂₀ aryl" is used according to its usual meaning and it encompasses notably aromatic mono- or poly-cyclic groups, preferably mono- or bi-cyclic groups, comprising from 6 to 12 carbon atoms, preferably phenyl or naphthyl.

Still, the expression "C₁-C₂₀ arylalkyl" is used according to its usual meaning and it encompasses linear, branched or cyclic saturated hydrocarbon groups comprising, as substituent, one or more than one aromatic mono- or poly-cyclic group, such as, notably benzyl group.

Finally, the expression "C₁-C₂₀ alkylaryl" is used according to its usual meaning and it encompasses aromatic mono- or poly-cyclic groups comprising as substituent, one or more than one alkyl group, e.g. one or more than one linear, cyclic, branched saturated hydrocarbon chain having from 1 to 14 carbon atoms and preferably from 1 or 2 to 10 carbon atoms.

More preferably R¹ and R² in formulae (I_{de}) and (Iₐₑ), equal to or different from each other, are preferably selected from the group consisting of
methyl, ethyl, n-propyl, isopropyl, n-butyl, isobutyl, terbutyl, sec-butyl, 2-ethyl-butyl, n-pentyl, isopentyl, sec-pentyl, cyclopentyl, n-hexyl, isohexyl, sec-hexyl, 2-ethylhexyl, sec-heptyl, 3-methyl-hexyl, 4-methyl-hexyl, 1-ethyl-pentyl, 2-ethyl-pentyl, 3-ethyl-pentyl, n-octyl, isooctyl, 3-methyl-heptyl, n-nonyl, n-decyl, n-undecyl, n-dodecyl, n-tridecyl, n-tetradecyl, n-pentadecyl, cyclohexyl, phenyl and benzyl.

In formula (Iₑₐ), R³ and R⁴, equal to or different from each other, are preferably selected from the group consisting of C₁-C₂₀ alkyl, C₁-C₂₀ aryl, C₁-C₂₀ alkyaryl, C₁-C₂₀ arylalkyl groups, all said groups possibly comprising one or more than one substituent, possibly having one or more than one heteroatom, and of cyclic moieties comprising both R³ and R⁴ and the nitrogen atom to which they are bound, said cyclic moieties possibly comprising one or more than one heteroatom, e.g. an oxygen atom or an additional nitrogen atom.

In formula (Iₑₐ), R³ and R⁴, equal to or different from each other, are more preferably selected from the group consisting of methyl, ethyl, hydroxyethyl, n-propyl, isopropyl, n-butyl, isobutyl, terbutyl, n-pentyl, isopentyl, hexyl, cyclohexyl, most preferably from the group consisting of methyl, ethyl and hydroxyethyl.

According to a first embodiment of the invention, A in formulae (I_{de}) and (I ₑₐ) is C₃-C₁₀ branched divalent alkylene.

According to this first embodiment, A is preferably selected from the group consisting of the following:
- A_{MG} groups of formula MGₐ -CH(CH₃)-CH₂-CH₂- or MG_{b} -CH₂-CH₂ -CH(CH₃)-,
- A_{ES} groups of formula ESₐ -CH(C₂H₅)-CH₂-, or ES_{b} -CH₂-CH(C₂H₅)-; and
- mixtures thereof.

In one more preferred variant of this first embodiment, the mixture (M) comprises, in addition to DMSO:
(i) at least one of the diester (I'_{de}) and at least one diester (I"_{de}), possibly in combination with at least one diester of formula (II_{de}); or
(ii) at least one of the esteramide (I'ₑₐ) and at least one esteramide (I"ₑₐ), possibly in combination with at least one esteramide of formula (IIₑₐ); or
(iii) combinations of (i) and (ii),
   wherein:
   - (I'_{de}) is R¹-OOC-A_{MG}-COO-R²
   - (I'ea) is R¹-OOC-A_{MG}-CO-NR³R⁴
   - (I"_{de}) is R¹-OOC-A_{ES}-COO-R²
   - (I"ₑₐ) is R¹-OOC-A_{ES}-CO-NR³R⁴;
   - (IIₑₐ) is R¹-OOC-(CH₂)₄-CO-NR³R⁴, and
   - (II_{de}) is R¹-OOC-(CH₂)₄-COO-R²,
      wherein:
   - A_{MG} is of formula MGₐ -CH(CH₃)-CH₂-CH₂- or MG_{b} -CH₂-CH₂-CH(CH₃ )-,
   - A_{ES} is of formula ESₐ -CH(C₂H₅)-CH₂-, or ES_{b} -CH₂-CH(C₂H₅)-; and wherein R¹ and R², equal to or different from each other, are independently selected from the group consisting of C₁-C₂₀ alkyl, C₁-C₂₀ aryl, C₁-C₂₀ alkyaryl, C₁-C₂₀ arylalkyl groups;
   - R³ and R⁴, equal to or different from each other, are selected from the group consisting of C₁-C₂₀ alkyl, C₁-C₂₀ aryl, C₁-C₂₀ alkyaryl, C₁-C₂₀ arylalkyl groups, all said groups possibly comprising one or more than one substituent, possibly having one or more than one heteroatom, and of cyclic moieties comprising both R³ and R⁴ and the nitrogen atom to which they are bound, said cyclic moieties possibly comprising one or more than one heteroatom, e.g. an oxygen atom or an additional nitrogen atom.

In above mentioned formulae (I'_{de}), (I"_{de}) and (II_{de}), (I'ₑₐ), (I"ₑₐ) and (IIₑₐ), R¹ and R² are preferably methyl groups, while R³ and R⁴, equal to or different from each other, are preferably selected from the group consisting of methyl, ethyl, hydroxyethyl.

According to this variant, mixture (M) can comprise, in addition to DMSO:
(j) a diester mixture consisting essentially of:
   - from 70 to 95 % by weight of diester of formula (I'_{de});
   - from 5 to 30 % by weight of diester of formula (I"_{de}), and
   - from 0 to 10 % by weight of diester of formula (II_{de}), as above detailed; or
(jj) an esteramide mixture consisting essentially of:
   - from 70 to 95 % by weight of esteramide of formule (I'ₑₐ);
   - from 5 to 30 % by weight of esteramide of formula (I"ₑₐ), and
   - from 0 to 10 % by weight of esteramide of formule (IIₑₐ), as above detailed; or
(jjj) mixtures of (j) and (jj), as above detailed.

An example of the useful diester-based mixture wherein A is branched is RHODIASOLV^{®} IRIS solvent, commercialized by Rhodia.

RHODIASOLV^{®} IRIS solvent is a mixture of diesters comprising essentially (more than 80 wt %) of dimethyl ethylsuccinate and dimethyl 2-methylglutarate.

In one other embodiment, A in formulae (I_{de}) and (Iₑₐ) is a linear divalent alkylene group of formula (CH₂)ᵣ, wherein r is an integer of from 2 to 4.

In a variant of this embodiment, the mixture (M) comprises, in addition to DMSO:
(k) at least one of the diester (III⁴_{de}), at least one diester (III³_{de)}, and at least one diester of formula (III²_{de}); or
(kk) at least one of the esteramide (III⁴ₑₐ), at least one esteramide (III³ₑₐ), and at least one esteramide of formula (III²ₑₐ); or
(kkk) combinations of (k) and (kk),
   wherein:
   - (III⁴_{de}) is R¹-OOC-(CH₂)₄-COO-R²
   - (III³_{de}) is R¹-OOC-(CH₂)₃-COO-R²
   - (III²_{de}) is R¹-OOC-(CH₂)₂-COO-R²
   - (III⁴ₑₐ) is R¹-OOC-(CH₂)₄-CO-NR³R⁴
   - (III³ₑₐ) is R¹-OOC-(CH₂)₃-CO-NR³R⁴
   - (III²ₑₐ) is R¹-OOC-(CH₂)₂-CO-NR³R⁴
   wherein R¹ and R², equal to or different from each other, are independently C₁-C₂₀ alkyl, C₁-C₂₀ aryl, C₁-C₂₀ alkyaryl, C₁-C₂₀ arylalkyl groups;
   - R³ and R⁴, equal to or different from each other, are selected from the group consisting of C₁-C₂₀ alkyl, C₁-C₂₀ aryl, C₁-C₂₀ alkyaryl, C₁-C₂₀ arylalkyl groups, all said groups possibly comprising one or more than one substituent, possibly having one or more than one heteroatom, and of cyclic moieties comprising both R³ and R⁴ and the nitrogen atom to which they are bound, said cyclic moieties possibly comprising one or more than one heteroatom, e.g. an oxygen atom or an additional nitrogen atom.

In above mentioned formulae (III⁴_{de}), (III³_{de}), (III²_{de}), (III⁴ₑₐ), (III³ₑₐ), and (III²ₑₐ), R¹ and R² are preferably methyl groups, while R³ and R⁴, equal to or different from each other, are preferably selected from the group consisting of methyl, ethyl, hydroxyethyl.

According to certain preferred variant of this embodiment, mixture (M) can comprise, in addition to DMSO:
(I) a diester mixture consisting essentially of dimethyladipate (r = 4), dimethylglutarate (r = 3) and dimethylsuccinate (r = 2); or
(II) an esteramide mixture consisting essentially of H₃COOC-(CH₂)₄ -CO-N(CH₃)₂, H₃COOC-(CH₂)₃-CO-N(CH₃)₂, and H₃COOC-(CH₂)₂ -CO-N(CH₃)₂; or
(III) a diester mixture of diethyladipate (r = 4), diethylglutarate (r = 3) and diethylsuccinate (r = 2); or
(Iv) an esteramide mixture consisting essentially of H₅C₂OOC-(CH₂)₄ -CO-N(CH₃)₂, H₅C₂OOC-(CH₂)₃-CO-N(CH₃)₂, and H₅C₂OOC-(CH₂)₂ -CO-N(CH₃)₂; or
(v) a mixture of diisobutyladipate (r = 4), diisobutylglutarate (r = 3) and diisobutylsuccinate (r = 2); or
(vI) an esteramide mixture consisting essentially of H₉C₄OOC-(CH₂)₄ -CO-N(CH₃)₂, H₉C₄OOC-(CH₂)₃-CO-N(CH₃)₂, and H₉C₄OOC-(CH₂)₂ -CO-N(CH₃)₂; or
(vII) mixtures thereof.

An exemplary embodiment of the variant listed above under section (I) is a diester mixture consisting essentially of:
- from 9 to 17 % by weight of dimethyladipate;
- from 59 to 67 % by weight of dimethylglutarate; and
- from 20 to 28 % by weight of dimethylsuccinate.

An example of a useful diester-based mixture wherein A is linear is RHODIASOLV^{®} RPDE solvent, marketed by Rhodia.

RHODIASOLV^{®} RPDE solvent is a mixture of diesters comprising essentially (more than 70 wt %) of dimethylglutarate and dimethylsuccinate.

Diesters of formula (I_{de}) which can be used in the composition of the invention can be prepared notably according to the teachings of EP 1991519 A (RHODIA OPERATIONS) 19.11.2008. Esteramides of formula (Iₑₐ) which can be used in the composition of the invention can be prepared notably according to the teachings of WO 2011/154661 (RHODIA OPERATIONS) 15.12.2011 and US 20110166025 (RHODIA OPERATIONS) 07.07.2011 .

In the rest of the text, the expressions "fluoropolymer" and "polymer (A)" are understood, for the purposes of the invention, both in the plural and the singular, that is to say that the inventive composition may comprise one or more than one polymer (A).

As said, mixture (M) comprises dimethylsulfoxide (DMSO) and at least one solvent selected from the group consisting of diesters of formula (I_{de}) and ester-amide of formula (Iₑₐ).

The weight ratio between the solvents of formula (I_{de}) and (Iₑₐ) and DMSO is preferably from 1/99 to 99/1, preferably of from 20/80 to 80/20, more preferably of 70/30 to 30/70.

The skilled in the art will select the appropriate weight ratio for opportunely tunig properties of the mixture (M) in the inventive composition.

The mixture (M) may comprise, in addition to the DMSO and the solvents of formula (I_{de}) and (Iₑₐ), at least one further solvent.

If used, the amount of said further solvent is generally lower than both the amount of DMSO and of overall amount of the solvents of formula (I_{de}) and (Iₑₐ). Still, the amount of said further solvent, when present, is preferably lower than 25 % wt, preferably lower than 20 % wt, more preferably lower than 15 % wt, even more preferably lower than 10 % wt, with respect to the total amount of DMSO and of solvents of formula (I_{de}) and (lea).

Exemplary embodiments of further solvents which may be used in the mixture (M) of the composition of the present invention include notably:
- aliphatic hydrocarbons including, more particularly, the paraffins such as, in particular, pentane, hexane, heptane, octane, nonane, decane, undecane, dodecane or cyclohexane, and naphthalene and aromatic hydrocarbons and more particularly aromatic hydrocarbons such as, in particular, benzene, toluene, xylenes, cumene, petroleum fractions composed of a mixture of alkylbenzènes;
- aliphatic or aromatic halogenated hydrocarbons including more particularly, perchlorinated hydrocarbons such as, in particular, tetrachloroethylene, hexachloroethane ; partially chlorinated hydrocarbons such as dichloromethane, chloroform, 1,2-dichloroethane, 1,1,1-trichloroethane, 1,1,2,2-tetrachloroethane, pentachloroethane, trichloroethylene, 1-chlorobutane, 1,2-dichlorobutane ; monochlorobenzene, 1,2-dichlorobenzene, 1,3-dichlorobenzene, 1,4-dichlorobenzene, 1,2,4-trichlorobenzene or mixture of different chlorobenzenes;
- aliphatic, cycloaliphatic or aromatic ether oxides, more particularly, diethyl oxide, dipropyl oxide, diisopropyl oxide, dibutyl oxide, methyltertiobutylether, dipentyl oxide, diisopentyl oxide, ethylene glycol dimethyl ether, ethylene glycol diethyl ether, ethylene glycol dibutyl ether benzyl oxide; dioxane, tetrahydrofuran (THF);
- glycol ethers such as ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether;
- glycol ether esters such as ethylene glycol methyl ether acetate, ethylene glycol monoethyl ether acetate, ethylene glycol monobutyl ether acetate;
- alcohols such as methyl alcohol, ethyl alcohol, diacetone alcohol;
- ketones such as acetone, methylethylketone, methylisobutyl ketone, diisobutylketone, cyclohexanone, isophorone;
- linear or cyclic esters such as : isopropyl acetate, n-butyl acetate, methyl acetoacetate, dimethyl phthalate, γ-butyrolactone;
- linear or cyclic carboxamides such as N,N-dimethylacetamide (DMAC), N,N-diethylacetamide, dimethylformamide (DMF), diethylformamide or N-methyl-2-pyrrolidinone (NMP);
- organic carbonates for example dimethyl carbonate, diethyl carbonate, dipropyl carbonate, dibutyl carbonate, ethylmethyl carbonate, ethylene carbonate, vinylene carbonate;
- phosphoric esters such as trimethyl phosphate, triethyl phosphate;
- ureas such as tetramethylurea, tetraethylurea.

For embodiments wherein the mixture (M) comprises a further solvent, mixture (M) is preferably free from solvents qualified as Carcinogenic, Mutagenic or Toxic to Reproduction according to chemical safety classification (CMR solvents); more specifically, the mixture (M) is advantageously substantially free from NMP, DMF and DMAC.

Nevertheless, mixtures (M) substantially free from any further solvent, i.e. consisting essentially of DMSO and of solvents of formula (I_{de}) and (Iₑₐ) are those preferred.

Minor amount of impurities, solvent traces and residues might be present in the mixture (M) beside solvents of formula (I_{de}) and (Iₑₐ) and DMSO, without these affecting the properties of the mixture (M). A total amount of said other components up to about 1 % wt, based on the total weight of mixture (M) is generally tolerated.

Preferably, the composition of the invention comprises only one polymer (A).

The polymer (A) is preferably a "melt-processible" polymer. For the purpose of the present invention, by the term "melt-processible" is meant that the polymer (A) can be processed (i.e. fabricated into shaped articles such as films, fibers, tubes, fittings, wire coatings by conventional melt extruding, injecting or casting means. This generally requires that the melt viscosity at the processing temperature be no more than 10⁸ Pa x sec, preferably from 10 to 10⁶ Pa x sec.

The melt viscosity of the polymer (A) can be measured according to ASTM D-1238, using a cylinder, orifice and piston tip made of a corrosion-resistant alloy, charging a sample into the 9.5 mm inside diameter cylinder which is maintained at a temperature exceeding melting point, extruding the sample through a 2.10 mm diameter, 8.00 mm long square-edged orifice under a load (piston plus weight) of 5 kg. Melt viscosity is calculated in Pa x sec from the observable extrusion rate in grams per minute.

Also, polymer (A) typically has a dynamic viscosity at a shear rate of 1 rad x sec⁻¹ and at a temperature exceeding melting point of about 30°C, preferably at a temperature of Tₘ₂ + (30 ± 2°C) is comprised between 10 and 10⁶ Pa x sec, when measured with a controlled strain rheometer, employing an actuator to apply a deforming strain to the sample and a separate transducer to measure the resultant stress developed within the sample, and using the parallel plate fixture.

The polymer (A) of the invention is a fluoropolymer, i.e. a polymer comprising recurring units derived from at least one fluorinated monomer. Non limitative examples of suitable fluorinated monomers are notably:
- C₂-C₈ perfluoroolefins, such as tetrafluoroethylene (TFE), hexafluoropropene (HFP);
- C₂-C₈ hydrogen-containing fluoro-olefins, such as vinyl fluoride; 1,2-difluoroethylene, vinylidene fluoride (VDF) and trifluoroethylene (TrFE); pentafluoropropylene; and hexafluoroisobutylene;
- (per)fluoroalkylethylenes complying with formula CH₂=CH-R_{f0}, in which R _{f0} is a C₁-C₆ (per)fluoroalkyl or a C₁-C₆ (per)fluorooxyalkyl having one or more ether groups ;
- chloro- and/or bromo- and/or iodo-C₂-C₆ fluoroolefins, like chlorotrifluoroethylene (CTFE);
- fluoroalkylvinylethers complying with formula CF₂=CFOR_{f1} in which R_{f1} is a C₁-C₆ fluoro- or perfluoroalkyl, e.g. -CF₃, -C₂F₅, -C₃F₇;
- hydrofluoroalkylvinylethers complying with formula CH₂=CFOR_{f1} in which R_{f1} is a C₁-C₆ fluoro- or perfluoroalkyl, e.g. -CF₃, -C₂F₅, -C₃F₇;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups, like perfluoro-2-propoxy-propyl;
- fluoroalkyl-methoxy-vinylethers complying with formula CF₂=CFOCF₂OR _{f2} in which R_{f2} is a C₁-C₆ fluoro- or perfluoroalkyl, e.g. -CF₃, -C₂F₅, -C₃F₇ or a C₁-C₆ (per)fluorooxyalkyl having one or more ether groups, like -C₂F₅ -O-CF₃;
- functional fluoro-alkylvinylethers complying with formula CF₂=CFOY₀, in which Yo is a C₁-C₁₂ alkyl or (per)fluoroalkyl, or a C₁-C₁₂ oxyalkyl or a C₁
- C₁₂ (per)fluorooxyalkyl, said Yo group comprising a carboxylic or sulfonic acid group, in its acid, acid halide or salt form;
- fluorodioxoles, of formula : 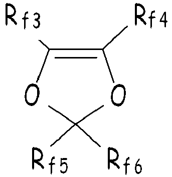 wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

Fluoropolymers which have been found particularly suitable for the compositions of the invention are per(halo)fluoropolymers; these materials are particularly advantageous when used in foamable compositions intended to be used for manufacturing foamed insulators (e.g. jackets or primaries for plenum cables, coaxial cables), due to their advantageous low flammability and outstanding dielectrical properties.

For the purpose of the invention, the term "per(halo)fluoropolymer" is intended to denote a fluoropolymer substantially free of hydrogen atoms.

The per(halo)fluoropolymer can comprise one or more halogen atoms (Cl, Br, I), different from fluorine.

The term "substantially free of hydrogen atom" is understood to mean that the per(halo)fluoropolymer consists essentially of recurring units derived from ethylenically unsaturated monomers comprising at least one fluorine atom and free of hydrogen atoms [per(halo)fluoromonomer (PFM)].

The per(halo)fluoropolymer can be a homopolymer of a per(halo)fluoromonomer (PFM) or a copolymer comprising recurring units derived from more than one per(halo)fluoromonomer (PFM).

Non limitative examples of suitable per(halo)fluoromonomers (PFM) are notably:
- C₂-C₈ perfluoroolefins, such as tetrafluoroethylene (TFE) and hexafluoropropene (HFP);
- C₂-C₆ perhalofluoroolefins comprising at least one halogen different from fluorine, e.g. Cl, Br, I; such as notably chlorotrifluoroethylene;
- per(halo)fluoroalkylvinylethers complying with general formula CF₂ =CFOR_{f1} in which R_{f1} is a C₁-C₆ per(halo)fluoroalkyl, possibly comprising one or more than one halogen atom different from F; non limitative exampled of R_{f1} are notably -CF₃, -C₂F₅, -C₃F₇;

- per(halo)fluoro-oxyalkylvinylethers complying with general formula CF ₂=CFOX₀₁, in which X₀₁ is a C₁-C₁₂ per(halo)fluorooxyalkyl possibly comprising halogen atoms different from F, having one or more ether groups, such as, notably, perfluoro-2-propoxy-propyl group;
- per(halo)fluoro-methoxy-alkylvinylethers complying with general formula CF₂=CFOCF₂OR_{f2} in which R_{f2} is a C₁-C₆ per(halo)fluoroalkyl, possibly comprising halogen atoms different from F, such as -CF₃, -C₂F ₅, -C₃F₇ or a C₁-C₆ per(halo)fluorooxyalkyl, possibly comprising halogen atoms different from F, having one or more ether groups, such as -C₂F₅-O-CF₃;
- per(halo)fluorodioxoles of formula : 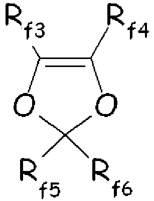 wherein each of R_{f3}, R_{f4}, R_{f5}, R_{f6}, equal of different each other, is independently a fluorine atom, a C₁-C₆ per(halo)fluoroalkyl group, optionally comprising one or more oxygen atom, possibly comprising halogen atoms different from F, e.g. -CF₃, -C₂F₅, -C₃F₇, -OCF₃, -OCF₂ CF₂0CF₃; preferably a per(halo)fluorodioxole complying with formula here above, wherein R_{f3} and R_{f4} are fluorine atoms and R_{f5} and R_{f6} are perfluoromethyl groups (-CF₃) [perfluoro-2,2-dimethyl-1,3-dioxole (PDD)], or a per(halo)fluorodioxole complying with formula here above, wherein R_{f3}, R_{f5} and R_{f6} are fluorine atoms and R_{f4} is a perfluoromethoxy group (-OCF₃)
   [2,2,4-trifluoro-5-trifluoromethoxy-1,3-dioxole or perfluoromethoxydioxole (MDO)].

The per(halo)fluoropolymer is advantageously chosen among copolymers of tetrafluoroethylene (TFE) with at least one per(halo)fluoromonomer (PFM) different from TFE.

The TFE copolymers as above detailed comprise advantageously at least 1.5 % wt, preferably at least 5 % wt, more preferably at least 7 % wt of recurring units derived from the per(halo)fluoromonomer (PFM).

The TFE copolymers as above detailed comprise advantageously at most 30 % wt, preferably at most 25 % wt, more preferably 20 % wt of recurring units derived from the per(halo)fluoromonomer (PFM).

Good results have been obtained with TFE copolymers as above detailed comprising at least 1.5 % wt and at most 30 % wt of recurring units derived from the per(halo)fluoromonomer (PFM).

Preferred per(halo)fluoropolymers [polymers (A)] are selected among TFE copolymers comprising recurring units derived from at least one per(halo)fluoromonomer (PFM) chosen among the group consisting of:
1. perfluoroalkylvinylethers complying with formula CF₂=CFOR_{f1'}, in which R_{f1'} is a C₁-C₆ perfluoroalkyl, e.g. -CF₃, -C₂F₅, -C₃F_{7;} and/or
2. perfluoro-oxyalkylvinylethers complying with general formula CF₂ =CFOX₀, in which X₀ is a C₁-C₁₂ perfluorooxyalkyl having one or more ether groups, like perfluoro-2-propoxy-propyl group; and/or
3. C₃-C₈ perfluoroolefins, such as hexafluoropropene (HFP); and/or
4. perfluorodioxoles of formula : 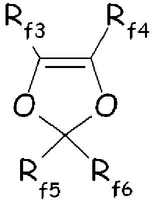 wherein each of R_{f3}, R_{f4}, R_{f5}, R_{f6}, equal of different each other, is independently a fluorine atom, a C₁-C₆ perfluoroalkyl group, optionally comprising one or more oxygen atom, e.g. -CF₃, -C₂F₅, -C₃F₇, -OCF₃, -OCF₂CF₂OCF₃.

More preferred per(halo)fluoropolymers are selected among TFE copolymers comprising recurring units derived from at least one per(halo)fluoromonomer (PFM) chosen among the group consisting of:
1. perfluoroalkylvinylethers complying with general formula CF₂=CFOR_{f1} in which R_{f1} is a C₁-C₆ perfluoroalkyl;
2. perfluoro-oxyalkylvinylethers complying with general formula CF₂ =CFOX₀₁, in which X₀₁ is a C₁-C₁₂ perfluorooxyalkyl having one or more ether groups;
3. C₃-C₈ perfluoroolefins; and
4. mixtures thereof.

According to a first embodiment of the invention, the polymer (A) is selected from the group consisting of TFE copolymers comprising recurring units derived from hexafluoropropylene (HFP) and optionally from at least one per(halo)fluoroalkylvinylether, as above defined, preferably from at least one perfluoroalkylvinylether complying with general formula CF₂=CFOR_{f1'} in which R_{f1'} is a C₁-C₆ perfluoroalkyl.

Preferred polymers (A) according to this embodiment are selected among TFE copolymers comprising (preferably consisting essentially of) recurring units derived from tetrafluoroethylene (TFE) and hexafluoropropylene (HFP) in an amount ranging from 3 to 15 wt % and, optionally, from 0.5 to 3 wt % of at least one perfluoroalkylvinylether, as above defined.

The expression 'consisting essentially of' is used within the context of the present invention for defining constituents of a polymer to take into account end chains, defects, irregularities and monomer rearrangements which might be comprised in said polymers in minor amounts, without this modifying essential properties of the polymer.

A description of such polymers (A) can be found notably in US 4029868 (DUPONT) 14.06.1977 , in US 5677404 (DUPONT) 14.10.1997 , in US 5703185 (DUPONT) 30.12.1997 , and in US 5688885 (DUPONT) 18.11.1997.

Polymer (A) according to this embodiment are commercially available under the trademark TEFLON^{®} FEP 9494, 6100 and 5100 from E.I. DuPont de Nemours, or from Daikin (e.g. FEP NP-101 material), or from Dyneon LLC (FEP 6322).

Best results within this embodiment have been obtained with TFE copolymers comprising (preferably consisting essentially of) recurring units derived from tetrafluoroethylene (TFE) and hexafluoropropylene (HFP) in an amount ranging from 4 to 12 wt % and either perfluoro(ethyl vinyl ether) or perfluoro(propyl vinyl ether) in an amount from 0.5 to 3 % wt.

According to a second embodiment of the invention, the polymer (A) is selected from the group consisting of TFE copolymers comprising recurring units derived from at least one per(halo)fluoroalkylvinylether, as above defined, preferably from at least one perfluoroalkylvinylether, as above defined and optionally further comprising recurring units derived from at least one C₃-C₈ perfluoroolefin.

Good results within this second embodiment have been obtained with TFE copolymers comprising recurring units derived from one or more than one perfluoroalkylvinylether as above specified; particularly good results have been achieved with TFE copolymers wherein the perfluoroalkylvinylether is perfluoromethylvinylether (of formula CF₂=CFOCF₃), perfluoroethylvinylether (of formula CF₂=CFOC₂F₅ ), perfluoropropylvinylether (of formula CF₂=CFOC₃F₇) and mixtures thereof.

According to a preferred variant of the second embodiment of the invention, the polymer (A) is advantageously a TFE copolymer consisting essentially of :
(a) from 3 to 13 %, preferably from 5 to 12 % by weight of recurring units derived from perfluoromethylvinylether;
(b) from 0 to 6 % by weight of recurring units derived from one or more than one fluorinated comonomer different from perfluoromethylvinylether and selected from the group consisting of perfluoroalkylvinylethers complying with general formula CF₂=CFOR_{f1'} in which R_{f1'} is a C₁-C₆ perfluoroalkyl and perfluoro-oxyalkylvinylethers complying with general formula CF₂=CFOX_{01'}, in which X_{01'} is a C₁-C₁₂ perfluorooxyalkyl having one or more ether groups; preferably derived from perfluoroethylvinylether and/or perfluoropropylvinylether ;
(c) recurring units derived from tetrafluoroethylene, in such an amount that the sum of the percentages of the recurring units (a), (b) and (c) is equal to 100 % by weight.

MFA and PFA suitable to be used for the composition of the invention are commercially available from Solvay Specialty Polymers Italy S.p.A. under the trade name of HYFLON^{®} PFA P and M series and HYFLON^{®} MFA.

According to another preferred variant of this second embodiment of the invention, the polymer (A) is advantageously a TFE copolymer consisting essentially of :
(a) from 0.5 to 5 % by weight of recurring units derived from perfluoromethylvinylether;
(b) from 0.4 to 4.5 % by weight of recurring units derived from one or more than one fluorinated comonomer different from perfluoromethylvinylether and selected from the group consisting of perfluoroalkylvinylethers, as above detailed and/or perfluoro-oxyalkylvinylethers, as above detailed; preferably derived from perfluoroethylvinylether and/or perfluoropropylvinylether ;
(c) from 0.5 to 6 % weight of recurring units derived from at least one C₃-C ₈ perfluoroolefins, preferably derived from hexafluoropropylene; and
(d) recurring units derived from tetrafluoroethylene, in such an amount that the sum of the percentages of the recurring units (a), (b), (c) and (d) is equal to 100 % by weight.

The polymer (A) of the invention is advantageously thermoplastic.

The term "thermoplastic" is understood to mean, for the purposes of the present invention, polymers existing, at room temperature (25°C), below their melting point if they are semi-crystalline, or below their Tg if amorphous. These polymers have the property of becoming soft when they are heated and of becoming rigid again when hey are cooled, without there being an appreciable chemical change. Such a definition may be found, for example, in the encyclopaedia called "Polymer Science Dictionary", Mark S.M. Alger, London School of Polymer Technology, Polytechnic of North London, UK, published by Elsevier Applied Science, 1989.

Preferably, the polymer (A) is semi-crystalline. The term "semi-crystalline" is intended to denote a polymer having a heat of fusion of more than 1 J/g when measured by Differential canning Calorimetry (DSC) at a heating rate of 10°C/min, according to ASTM D 3418. Preferably, the semi-crystalline polymer (A) of the invention has a heat of fusion of at least 3 J/g, more preferably of at least 5 J/g, most preferably at least 10 J/g.

Suitable polymers (P) may have a completely amorphous structure, a partially or completely crystalline structure, or anything in between. Upon heating, these suitable thermoplastic polymers can melt, becoming sufficiently free flowing to permit processing using standard techniques (molding, extrusion). In certain embodiments, both amorphous and at least partially crystalline polymers (P) may be used.

Polymers (P) suitable for use in the present invention are preferably selected from the group consisting of aromatic polyimides (PI), in particular polyester-imides (PEI) and polyamide-imides (PAI), and aromatic sulfone polymers (SP).

To the purpose of the present invention, "aromatic polyimide (PI)" is intended to denote any polymer comprising recurring units, more than 50 % moles of said recurring units comprising at least one aromatic ring and at least one imide group, as such (formula 1A) or in its amic acid form (formula 1B) [recurring units (R_{PI})] :

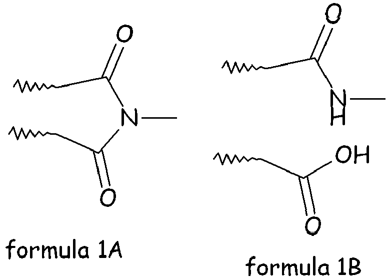

The imide group, as such or in its corresponding amic acid form, is advantageously linked to an aromatic ring, as illustrated below : 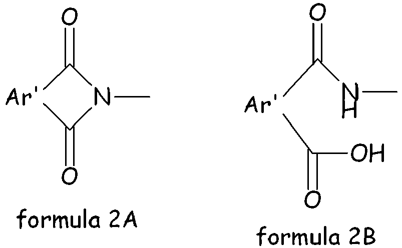 whereas Ar' denotes a moiety containing at least one aromatic ring.

The imide group is advantageously present as condensed aromatic system, yielding a five- or six-membered heteroaromatic ring, such as, for instance, with benzene (phthalimide-type structure, formula 3) and naphthalene (naphthalimide-type structure, formula 4).

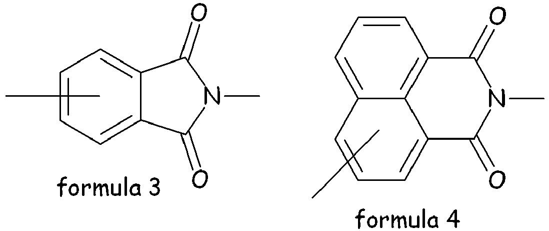

The formulae here below depict examples of recurring units (R_{PI}) (formulae 5A to 5C) : 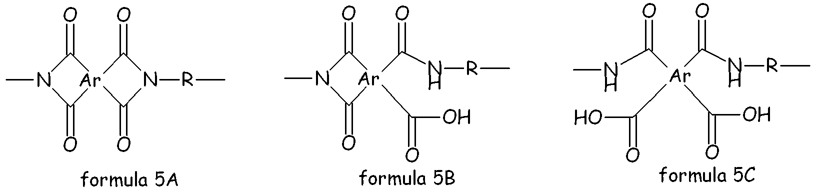 wherein :
Ar represents an aromatic tetravalent group; typically Ar is selected from the group consisting of following structures: 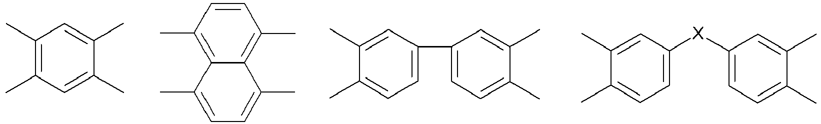 and corresponding optionally substituted structures, with X being -O-, -C(O)-, -CH₂-, -C(CF₃)₂-, -(CF₂)ₙ-, with n being an integer from 1 to 5;
R represents an aromatic divalent group; typically R is selected from the group consisting of following structures: 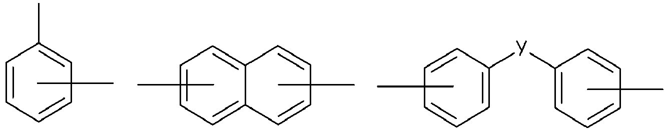 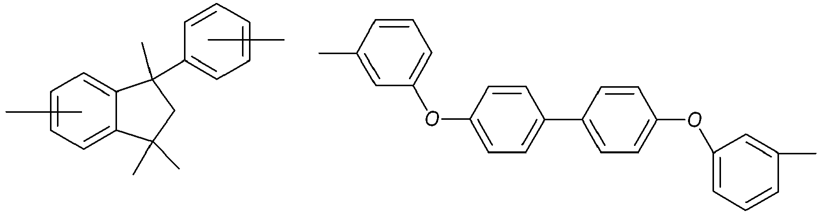 and corresponding optionally substituted structures, with Y being -O-, -S-, -SO₂-, -CH₂-, -C(O)-, -C(CF₃)₂-, -(CF₂)ₙ, n being an integer from 0 to 5.

Polyimides commercialized by DuPont as VESPEL^{®} polyimides or by Mitsui as AURUM^{®} polyimides are suitable for the purpose of the invention.

The recurring units (R_{PI}) of the aromatic polyimide can comprise one or more functional groups other than the imide group, as such and/or in its amic acid form. Non limitative examples of polymers complying with this criterion are aromatic polyetherimides (PEI), aromatic polyesterimides and aromatic polyamide-imides (PAI).

To the purpose of the present invention, "aromatic polyesterimide" is intended to denote any polymer more than 50 % moles of the recurring units comprise at least one aromatic ring, at least one imide group, as such and/or in its amic acid form, and at least one ester group [recurring units (R_{PEI})]. Typically, aromatic polyesterimides are made by reacting at least one acid monomer chosen from trimellitic anhydride and trimellitic anhydride monoacid halides with at least one diol, followed by reaction with at lest one diamine.

To the purpose of the present invention, "aromatic polyamide-imide (PAI)" is intended to denote any polymer comprising more than 50 % moles of recurring units comprising at least one aromatic ring, at least one imide group, as such and/or in its amic acid form, and at least one amide group which is not included in the amic acid form of an imide group [recurring units (R_{PAI})].

The recurring units (R_{PAI}) are advantageously chosen among : 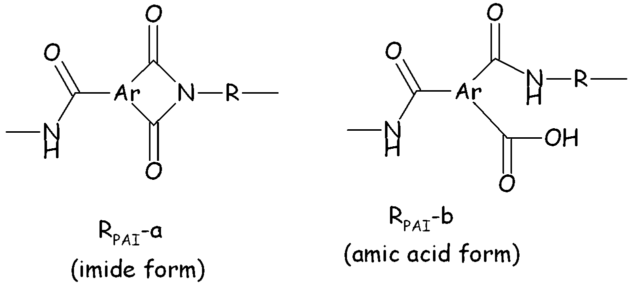 wherein :
Ar is a trivalent aromatic group; typically Ar is selected from the group consisting of following structures: 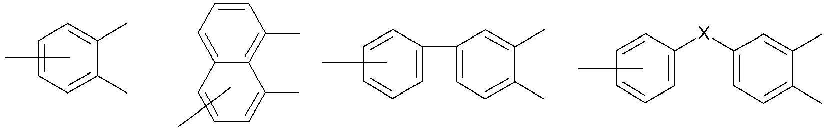 and corresponding optionally substituted structures, with X being -O-, -C(O)-, -CH₂-, -C(CF₃)₂-, -(CF₂)ₙ-, with n being an integer from 1 to 5;
R is a divalent aromatic group; typically R is selected from the group consisting of following structures: 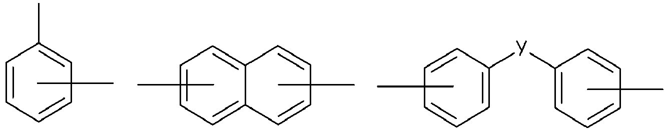 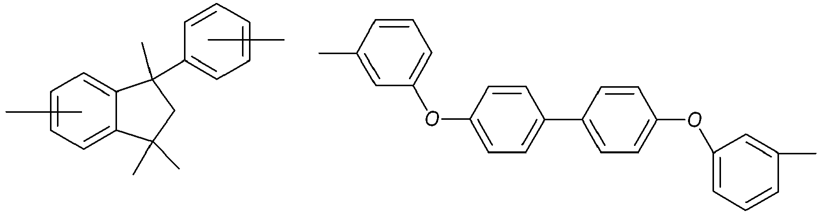 and corresponding optionally substituted structures, with Y being -O-, -S-, -SO₂-, -CH₂-, -C(O)-, -C(CF₃)₂-, -(CF₂)ₙ, n being an integer from 0 to 5.

Preferably, the aromatic polyamide-imide comprises more than 50 % of recurring units (R_{PAI}) comprising an imide group in which the imide group is present as such, like in recurring units (R_{PAI}-a), and/or in its amic acid form, like in recurring units (R_{PAI}-b).

Recurring units (R_{PAI}) are preferably chosen from recurring units (I), (m) and (n), in their amide-imide (a) or amide-amic acid (b) forms: 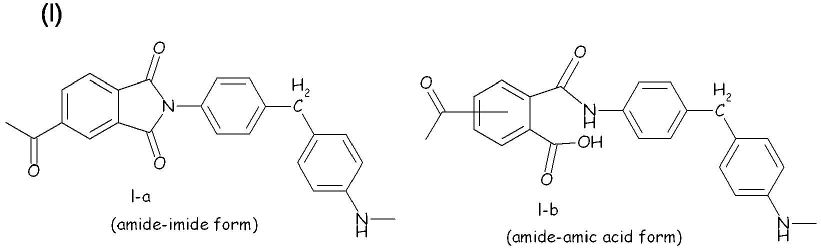 wherein the attachment of the two amide groups to the aromatic ring as shown in (I-b) will be understood to represent the 1,3 and the 1,4 polyamide-amic acid configurations; 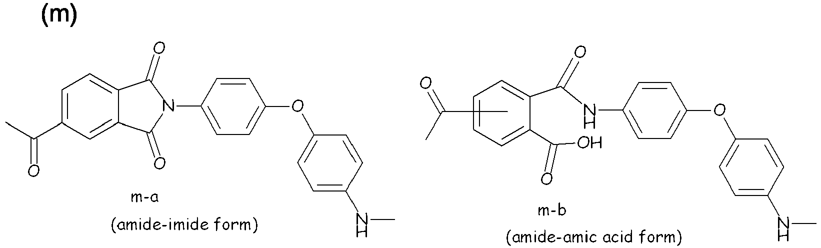 wherein the attachment of the two amide groups to the aromatic ring as shown in (m-b) will be understood to represent the 1,3 and the 1,4 polyamide-amic acid configurations; and 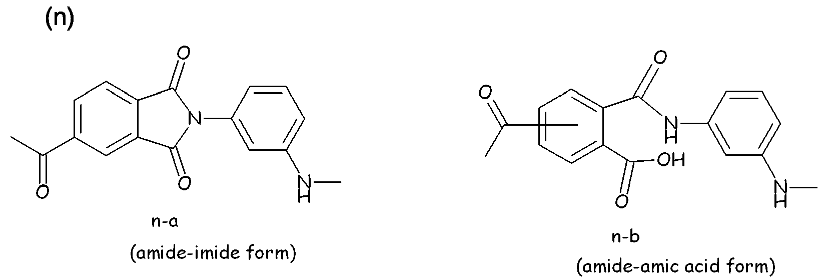 wherein the attachment of the two amide groups to the aromatic ring as shown in (n-b) will be understood to represent the 1,3 and the 1,4 polyamide-amic acid configurations.

Very preferably, the aromatic polyamide-imide comprises more than 90 % moles of recurring units (R_{PAI}). Still more preferably, it contains no recurring unit other than recurring units (R_{PAI}). Polymers commercialized by Solvay Specialty Polymers USA, L.L.C., as TORLON^{®} polyamide-imides comply with this criterion.

For the purpose of the invention, the expression "aromatic sulfone polymer (SP)" is intended to denote any polymer, at least 50 % moles of the recurring units thereof comprise at least one group of formula (SP) [recurring units (R_{SP})]:

-Ar-SO₂-Ar'- formula (SP)

with Ar and Ar', equal to or different from each other, being aromatic groups. Recurring units (R_{SP}) generally comply with formula:

-Ar¹-(T'-Ar²)ₙ-O-Ar³-SO₂-[Ar⁴-(T-Ar²)ₙ-SO₂]ₘ-Ar⁵-O-

wherein:
- Ar¹, Ar², Ar³, Ar⁴, and Ar⁵, equal to or different from each other and at each occurrence, are independently a aromatic mono- or polynuclear group;
- T and T', equal to or different from each other and at each occurrence, is independently a bond or a divalent group optionally comprising one or more than one heteroatom; preferably T' is selected from the group consisting of a bond, -CH₂-, -C(O)-, -C(CH₃)₂-, -C(CF₃)₂-, -C(=CCl₂)-, -SO 2⁻,
- C(CH₃)(CH₂CH₂COOH)-, and a group of formula: 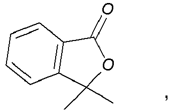 and preferably T is selected from the group consisting of a bond, -CH₂-, -C(O)-,
- C(CH₃)₂-, -C(CF₃)₂-, -C(=CCl₂)-, -C(CH₃)(CH₂CH₂COOH)-, and a group of formula: 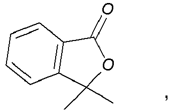 and
- n and m, equal to or different from each other, are independently zero or an integer of 1 to 5.

Recurring units (R_{SP}) can be notably selected from the group consisting of those of formulae (S-A) to (S-D) herein below: 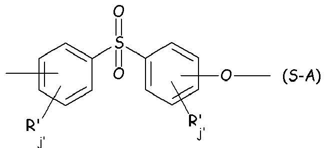 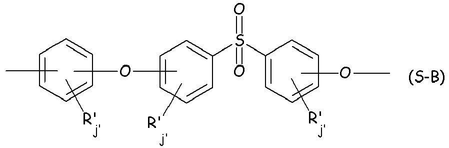 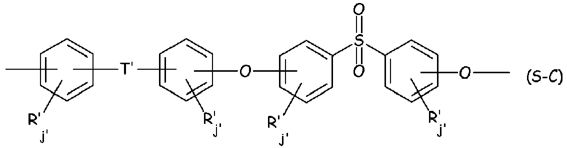 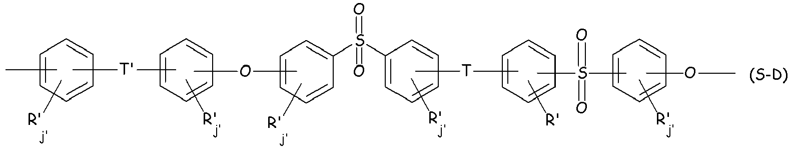 wherein:
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j' is zero or is an integer from 0 to 4;
- T and T', equal to or different from each other are a bond or a divalent group optionally comprising one or more than one heteroatom; preferably T' is selected from the group consisting of a bond, -CH₂-, -C(O)-, -C(CH₃)₂-, -C(CF₃)₂-, -C(=CCl₂)-, -C(CH₃)(CH₂CH₂COOH)-, -SO₂-, and a group of formula: 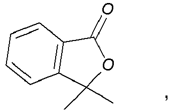 and preferably T is selected from the group consisting of a bond, -CH₂-, -C(O)-, -C(CH₃)₂-, -C(CF₃)₂-, -C(=CCl₂)-, -C(CH₃)(CH₂CH₂COOH)-, and a group of formula: 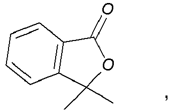 and

The aromatic sulfone polymer (P) has typically a glass transition temperature of advantageously at least 150°C, preferably at least 160°C, more preferably at least 175°C.

In a first preferred embodiment of the invention, at least 50 % moles of the recurring units of aromatic sulfone polymer (SP) are recurring units (R_{SP-1} ), in their imide form (R_{SP-1}-A) and/or amic acid forms [(R_{SP-1}-B) and (R _{SP-1}-C)] : 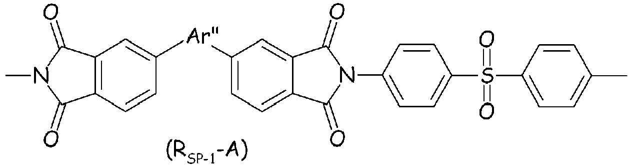 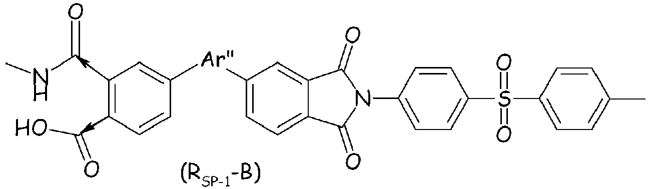 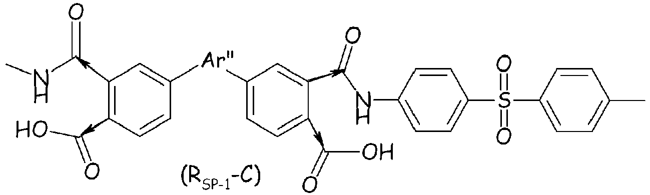 wherein :
the → denotes isomerism so that in any recurring unit the groups to which the arrows point may exist as shown or in an interchanged position;
Ar" is selected from the group consisting of: 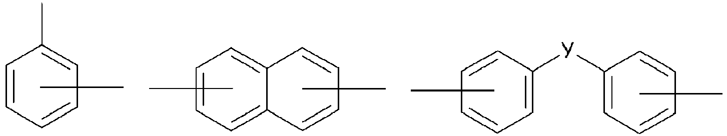 and corresponding optionally substituted structures, with Y being -O-, -C(O)-, -(CH₂)ₙ-, -C(CF₃)₂-, -(CF₂)ₙ-, with n being an integer from 1 to 5, and mixtures thereof.

In a second preferred embodiment of the invention, at least 50 % moles of the recurring units of aromatic sulfone polymer (SP) are recurring units (R _{SP-2}) and/or recurring units (R_{SP-3}) : 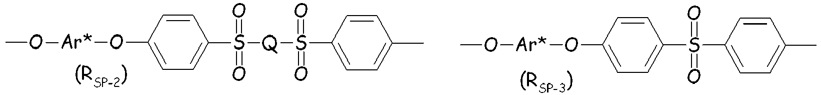 wherein :
Q and Ar*, equal or different from each other and at each occurrence, are independently a divalent aromatic group; preferably Ar* and Q equal or different from each other and at each occurrence, are independently selected from the group consisting of the following structures : 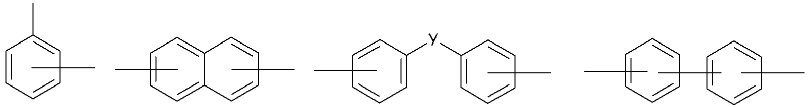 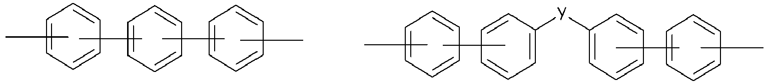 and corresponding optionally substituted structures, with Y being -O-, -CH=CH-, -C≡C-, -S-, -C(O)-, -(CH₂)ₙ-, -C(CF₃)₂-, -C(CH₃)₂-, -SO₂-, -(CF₂)ₙ-, with n being an integer from 1 to 5 and mixtures thereof; and mixtures thereof.

Recurring units (R_{SP-2}) are preferably selected from the group consisting of: 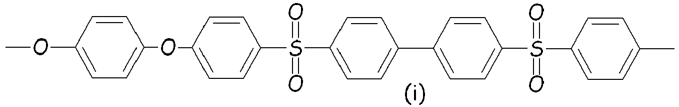 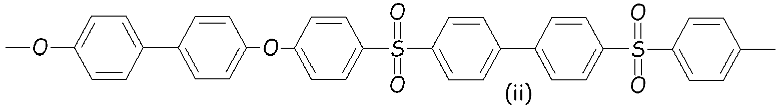 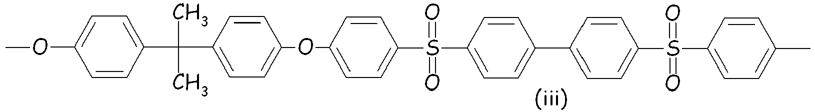 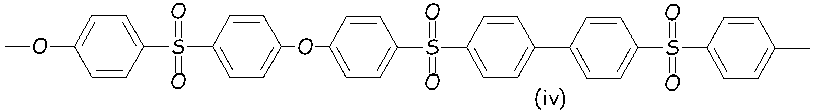 and mixtures thereof.

Recurring units (R_{SP-3}) are preferably selected from the group consisting of: 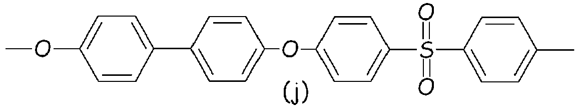 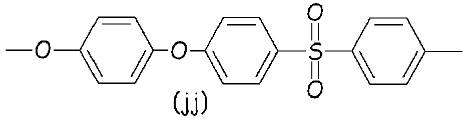 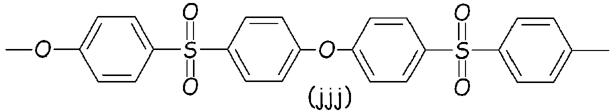 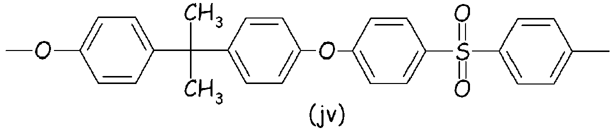 and mixtures thereof.

Aromatic sulfone polymer (SP) according to the second preferred embodiment of the invention comprises at least 50 % moles, preferably 70 % moles, more preferably 75 % moles of recurring units (R_{SP-2}) and/or (R _{SP-3}), still more preferably, it contains no recurring unit other than recurring units (R_{SP-2}) and/or (R_{SP-3}).

Good results were obtained with aromatic sulfone polymer (SP) the recurring units of which are recurring units (ii) (polybiphenyldisulfone, herein after), with aromatic sulfone polymer (SP) the recurring units of which are recurring units (j) (polyphenylsulfone or PPSU, hereinafter), with aromatic sulfone polymer (SP) the recurring units of which are recurring units (jj) (polyetherethersulfone, hereinafter), with aromatic sulfone polymer (SP) the recurring units of which are recurring units (jjj) and, optionally in addition, recurring units (jjj) (polyethersulfone or PES, hereinafter), and with aromatic sulfone polymer (SP) the recurring units of which are recurring units (jv) and, optionally in addition, recurring units (jj) (polysulfone, or PSF hereinafter).

Polyphenylsulfone (PPSU) is notably available as RADEL^{®} R PPSU from Solvay Specialty Polymers USA, L.L.C. Polysulfone (PSF) is notably available as UDEL^{®} PSF fromSolvay Specialty Polymers USA, L.L.C. Polyethersulfone (PES) is notably available as RADEL^{®} A PES or as VIRANTAGE^{®} r-PES from Solvay Specialty Polymers USA, L.L.C..

Very good results have been obtained with polyethersulfone (PES), i.e. with aromatic sulfone polymer (SP) the recurring units of which are recurring units (jjj) and, optionally in addition, recurring units (jj).

A PES which has been found particularly adapted to the composition of the present invention is a polyethersulfone (PES), as above detailed, having hydroxyl end groups in an amount of at least 20 µeq/g, preferably 40 µeq/g, more preferably 50 µeq/g. A PES of this type is notably commercially available as VIRANTAGE® r-PESU from Solvay Specialty Polymers USA, L.L.C.

According to certain preferred embodiments, the composition of the invention comprises a polymer (P) comprising at least one polyimide (PI) and at least one aromatic sulfone polymer (SP), as above detailed.

Still, according to certain even more preferred embodiments, the composition of the invention comprises a polymer (P) which is a mixture of at least one polyimide (PI) and at least one aromatic sulfone polymer (SP), as above detailed, more preferably a mixture of at least one polyamideimide (PAI) and at least one aromatic sulfone polymer (SP), even more preferably a mixture of at least one polyamideimide (PAI) and at least one polyethersulfone (PES), as above detailed.

The composition generally comprises polymer (A) and polymer (P) in amount such that the weight ration of the overall amount of polymer(s) (P) to the overall amount of polymer (A) is generally comprise between 20:80 to 70:30.

The composition can additionally comprise at least one pigment; pigments useful in the composition of the invention notably include, or will comprise, one or more of the following : titanium dioxide which is notably available form Whittaker, Clark & Daniels, South Plainfield, New Jersey, USA; Artic blue #3, Topaz blue #9, Olympic blue #190, Kingfisher blue #211, Ensign blue #214, Russet brown #24, Walnut brown #10, Golden brown #19, Chocolate brown #20, Ironstone brown #39, Honey yellow #29, Sherwood green #5, and Jet black #1 available from Shepherd Color Company, Cincinnati, Ohio, USA.; black F-2302, blue V-5200, turquoise F-5686, green F-5687, brown F-6109, buff F-6115, chestnut brown V-9186, and yellow V-9404 available from Ferro Corp., Cleveland, Ohio, USA and METEOR^{®} pigments available from Engelhard Industries, Edison, New Jersey, USA.

Still, the composition can comprise at least one of the following:
- an inorganic filler, preferably selected from mica fillers, more preferably from mica fillers coated with metal oxides; fillers of this type are notably available under brad name IRIODIN® from Merk;
- a rheology modifier, preferably selected from modified polyamides, modified urea; polyethylene waxes, organic derivatives of bentonite clays;
- a defoaming agent, preferably selected from polydimethyl siloxanes, in particular modified polydimethyl siloxanes, fluorinated silicones; and
- a surfactant, preferably selected from alkyl ethoxylated alcohols, alkylphenol ethoxylated alcohols.

Another aspect of the present invention is thus a process for manufacturing the composition as above detailed.

The composition of the invention can be prepared by mixing the polymer (A), the polymer (P), the mixture (M) and, when present, all other additional ingredients.

The composition, as above detailed, is generally used for coating a surface. Still another aspect of the invention thus pertains to a method for coating a surface, including a step of coating the composition, as above detailed, onto said surface, so as to obtain a wet coating layer onto said surface.

The surface is generally a metal surface, including notably aluminium, copper, tin, zinc, iron, and alloys thereof, including steel, and stainless steel.

Coating can be achieved by means of any coating method, including notably spray coating, spin-coating, brush-coating, and the like.

The method of coating can comprise a subsequent step of drying said wet coating layer, so as to obtain a dried coating layer onto said surface.

Drying can be carried out at temperatures ranging from room temperature to about 200°C, and is intended advantageously to remove all volatile materials contained in the composition.

The dried coating layer or the wet coating layer can be further coated with an additional layer of polymer, preferably of a fluoropolymer, so as to provide an outer fluoropolymer layer assembled onto the dried or wet coating layer onto the surface. The fluoropolymer used for this coating step is generally selected from polymers (A) as above described. Said outer coating layer of polymer (A) can be notably applied onto the said dried or wet coating layer by powder coating, spray coating or any other coating technique.

A subsequent sintering step generally follows, comprising heating at temperatures of from 300 to 400°C the multilayer assembly including the surface, the dried coating layer and the outer fluoropolymer layer.

### General procedure for the manufacture of the composition

The solvent mixture (M) comprising DMSO and at least one of the diesters of formula (I_{de}) and ester-amide of formula (Iₑₐ) is prepared by blending and shaking the ingredients in a bottle at a temperature comprised between 20 and 35°C.

The aromatic polycondensation polymer(s) (P) is/are added at room temperature and solubilised in the solvent mixture through agitation on a bottle roller at a temperature comprised between 20°C and 90°C. Once complete dissolution of said polymer(s) (P) was achieved, the fluoropolymer (A) was added to the resulting transparent solution, and the bottle is agitated on a bottle roller for additional 10 minutes. Following similar procedure (addition, followed by 10 minutes blending), the other ingredients were added in the following order:
- pigment;
- optional further solvent;
- surfactant;
- defoamer/deareator;
- optional rheology modifier.

The resulting mixture was finally homogeneized and milled in a glass beads blender, by adding an amount of glass beads equal to the volume of the obtained mixture, and blending the resulting dispersion in a Dispermat CV3 mixer for 10 minutes. Appropriate homogeneization was checked by evaluation on grind gauge grooves so as to detect, if any, presence of aggregates/particles with dimension higher than 5 µm. In case any particle(s)/aggregate(s) of dimension higher than 5 µm was/were detected, additional grinding for 10 minutes was performed. Formulation was considered completed and well-dispersed only when after the composition was distributed with a scraper in the grooves of the grind gauge, no detected scratches or film discontinuities above 5 µm were detected.

### General coating procedure

The formulation prepared as above detailed was applied on carbon steel substrates (square panels) via spray coating using a gun with a die of 1.2 mm and air pressure of 2.5 bar.

On the wet primer a layer of HYFLON(R) PFA powder (a tetrafluoroethylene/perfluoropropylvinylether copolymer commercially available from Solvay Specialty Polymers Italy, SPA) has been applied as top coat via electrostatic powder coating and then the assembly is treated in oven at 380°C for 20 minutes. The thickness of the complete coating (primer + top coat) was comprised between 50 and 100 µm.

### Evaluation of adhesion properties (including initial adhesion and after 60 days of water vapour exposure)

Adhesion performances of the coatings onto the substrate were determined via the cross cut test. The coating was cut making two incision lines of about 20 mm crossing each other in the middle with an angle of about 60°. The coating in proximity of the cross point was scratched: if a continuous polymer film was detached from the substrate, the adhesion was qualified as poor. If, on the contrary, it was not possible to peel the coating, the adhesion was quoted as good.

This test for assessing adhesion was performed on at least 3 coated panels shortly after completion of the coating procedure (about 1 hour) and on at least additional 3 coated panels, after having exposed the same to water vapour for 60 days. To this aim, the coated side of the panels to be submitted to the test was contacted with water vapour generated by a water bath maintained at 85°C, suspending horizontally the panels at about 3 cm from the free surface of hot water.

Details of the compositions manufactured and obtained results are provided in the following table.

In this table:
- the ester-amide (EA) is an ester-amide of formula MeO-C(O)-CH(Me)-CH ₂CH₂C(O)-NMe₂ with Me = methyl, commercially available from Rhodia under trade name POLAR CLEAN^{(R)};
- the diester (DE) is a mixture of diesters comprising essentially (more than 80 wt %) of dimethyl ethylsuccinate and dimethyl 2-methylglutarate, commercially available from Rhodia under trade name RHODIASOLV^{®} IRIS;
- MFA P6010 stands for HYFLON® MFA P6010, which is a TFE/MVE copolymer commercially available from Solvay Specialty Polymers Italy SpA;
- VW10200RP PES stands for Virantage® VW10200RP PES, which is a hydroxyl-functionalized PES with a molecular weight of about 45000, commercially available from Solvay Specialty Polymers USA, LLC;
- PAI AI10 stands for Torlon® PAI AI10, which is a polyamideimide commercially available from Solvay Specialty Polymers USA, LLC;
- 30C 965 Shepherd is a black pigment commercially available as DYNAMIX™ BLACK 30C965 from Shepherd Color Company;
- BYK®-431 is a Liquid Rheology Control Additive made consisting of a solution of a high molecular urea modified medium polar polyamide, commercially available from BYK;
- Airex 931 stands for TEGO^{®} Airex 931, which is a deaerator/defoaming agent for solvent-based coating systems, based on a fluorinated silicone commercially available from Evonik Tego Chemie GmbH;
- 15-S-5 stands for Tergitol™ 15-S-5, which is a secondary Alcohol Ethoxylate surfactant commercially available from Dow.

**Table 1**

| **Material** | | ***EX. 1C (wt parts)*** | ***Ex. 2 (wt parts)*** | ***Ex. 3 (wt parts)*** |
|---|---|---|---|---|
| Solvent mixture (M) | N-methylpyrrolidone | 52.3 | | |
| | Ester-amide (EA) | | 36 | |
| | Diester (DE) | | | 36 |
| | Diacetonalcohol | 18.3 | | |
| | Ethyl Acetate | 1.4 | 1.3 | 1.3 |
| | DMSO | | 36 | 36 |
| Polymer (P1) | VW10200RP PES | 6.6 | 6.3 | 6.3 |
| Polymer (P2) | PAI AI10 | 2 | 1.9 | 1.9 |
| Polymer (A) | MFA P6010 | 9.4 | 9 | 9 |
| Pigment | 30C 965 | 7 | 6.7 | 6.7 |
| Rheology modifier | BYK®-431 | 0.5 | 0.5 | 0.5 |
| Defoamer | Airex 931 | 0.2 | 0.2 | 0.2 |
| Surfactant | 15-S-5 | 2.3 | 2.3 | 2.3 |
| **Cross cut test** | | | | |
| Initial adhesion | | good | good | good |
| Adhesion after 60gg vapour exposure | | good | good | good |

Data provided herein above well demonstrate that solvent mixture (M) can be successfully used for manufacturing primer compositions providing outstanding adhesion behaviour, comparable to traditional primer compositions formulated with NMP solvent.

## Claims

1. A fluoropolymer composition comprising:
- at least one fluoropolymer [polymer (A)];
- at least one aromatic polycondensation polymer [polymer (P)];
- a solvent mixture [mixture (M)] comprising dimethylsulfoxide (DMSO) and at least one solvent selected from the group consisting of diesters of formula (I_{de}) and ester-amide of formula (Iₑₐ):
R¹-OOC-A_{de}-COO-R² (I_{de})
R¹-OOC-Aₑₐ-CO-NR³R⁴ (Iₑₐ)
wherein:
- R¹ and R², equal to or different from each other, are independently selected from the group consisting of C₁-C₂₀ hydrocarbon groups;
- R³ and R⁴, equal to or different from each other, are independently selected from the group consisting of hydrogen, C₁-C₃₆ hydrocarbon groups, possibly substituted, being understood that R³ and R⁴ might be part of a cyclic moiety including the nitrogen atom to which they are bound, said cyclic moiety being possibly substituted and/or possibly comprising one or more than one additional heteroatom, and mixtures thereof;
- A_{de} and Aₑₐ, equal to or different from each other, are independently a linear or branched divalent alkylene group,
wherein the weight ratio between the solvents of formula (I_{de}) and (Iₑₐ), and DMSO is of 70/30 to 30/70.

2. The fluoropolymer composition of claim 1, wherein the mixture (M) comprises, in addition to DMSO:
(i) at least one of the diester (I'_{de}) and at least one diester (I"_{de}), possibly in combination with at least one diester of formula (II_{de}); or
(ii) at least one of the esteramide (I'ₑₐ) and at least one esteramide (I"ₑₐ), possibly in combination with at least one esteramide of formula (IIₑₐ); or
(iii) combinations of (i) and (ii),
wherein:
- (I'_{de}) is R¹-OOC-A_{MG}-COO-R² - (I'ₑₐ) is R¹-OOC-A_{MG}-CO-NR³R⁴
- (I"_{de}) is R¹-OOC-A_{ES}-COO-R²
- (I"ea) is R¹-OOC-A_{ES}-CO- NR³R⁴;
- (IIₑₐ) is R¹-OOC-(CH₂)₄-CONR³R⁴; and
- (II_{de}) is R¹-OOC-(CH₂)₄-COO-R² ,
wherein:
- A_{MG} is of formula MGₐ -CH(CH₃)-CH₂-CH₂- or MG_{b}-CH₂-CH₂-CH(CH₃)-, - A_{ES} is of formula ESₐ -CH(C₂H₅)-CH₂-, or ES_{b} -CH₂-CH(C₂H₅)-; and wherein R¹ and R², equal to or different from each other, are independently selected from the group consisting of C₁-C₂₀ alkyl, C₁-C₂₀ aryl, C₁-C₂₀ alkyaryl, C₁-C₂₀ arylalkyl groups;
- R³ and R⁴, equal to or different from each other, are selected from the group consisting of C₁-C₂₀ alkyl, C₁-C₂₀ aryl, C₁-C₂₀ alkyaryl, C₁-C₂₀ arylalkyl groups, all said groups possibly comprising one or more than one substituent, possibly having one or more than one heteroatom, and of cyclic moieties comprising both R³ and R⁴ and the nitrogen atom to which they are bound, said cyclic moieties possibly comprising one or more than one heteroatom, e.g. an oxygen atom or an additional nitrogen atom.

3. The fluoropolymer composition of claim 1, wherein the mixture (M) comprises, in addition to DMSO:
(k) at least one of the diester (III⁴_{de}), at least one diester (III³_{de}), and at least one diester of formula (III²_{de});
(kk) at least one of the esteramide (III⁴ₑₐ), at least one esteramide (III³ₑₐ), and at least one esteramide of formula (III²ₑₐ); or
(kkk) combinations of (k) and (kk),
wherein:
- (III⁴_{de}) is R¹-OOC-(CH₂)₄-COO-R²
- (III³_{de}) is R¹-OOC-(CH₂)₃-COO-R² - (III²_{de}) is R¹-OOC-(CH₂)₂-COO-R²
- (III⁴ₑₐ) is R¹-OOC-(CH₂)₄-CO- NR³R⁴
- (III³ₑₐ) is R¹-OOC-(CH₂)₃-CO- NR³R⁴
- (III²ₑₐ) is R¹-OOC-(CH₂)₂-CO- NR³R⁴
wherein R¹ and R², equal to or different from each other, are independently C₁-C₂₀ alkyl, C₁-C₂₀ aryl, C₁-C₂₀ alkyaryl, C₁-C₂₀ arylalkyl groups;
- R³ and R⁴, equal to or different from each other, are selected from the group consisting of C₁-C₂₀ alkyl, C₁-C₂₀ aryl, C₁-C₂₀ alkyaryl, C₁-C₂₀ arylalkyl groups, all said groups possibly comprising one or more than one substituent, possibly having one or more than one heteroatom, and of cyclic moieties comprising both R³ and R⁴ and the nitrogen atom to which they are bound, said cyclic moieties possibly comprising one or more than one heteroatom, e.g. an oxygen atom or an additional nitrogen atom.

4. The fluoropolymer composition of anyone of the preceding claims, wherein the polymer (A) is a per(halo)fluoropolymer selected from the group consisting of copolymers of tetrafluoroethylene (TFE) with at least one per(halo)fluoromonomer (PFM) different from TFE, said per(halo)fluoromonomer (PFM) being selected from the group consisting of:
- C₃-C₈ perfluoroolefins, such as hexafluoropropene (HFP);
- C₂-C₆ perhalofluoroolefins comprising at least one halogen different from fluorine, e.g. Cl, Br, I; such as notably chlorotrifluoroethylene;
- per(halo)fluoroalkylvinylethers complying with general formula CF₂=CFOR_{f1} in which R_{f1} is a C₁-C₆ per(halo)fluoroalkyl, possibly comprising one or more than one halogen atom different from F; non limitative exarnpled of R_{f1} are notably -CF₃, -C₂F₅, -C₃F₇ ;
- per(halo)fluoro-oxyalkylvinylethers complying with general formula CF₂=CFOX₀₁, in which X₀₁ is a C₁-C₁₂ per(halo)fluorooxyalkyl possibly comprising halogen atoms different from F, having one or more ether groups, such as, notably, perfluoro-2-propoxy-propyl group;
- per(halo)fluoro-methoxy-alkylvinylethers complying with general formula CF₂=CFOCF₂OR_{f2} in which R_{f2} is a C₁-C₆ per(halo)fluoroalkyl, possibly comprising halogen atoms different from F, such as -CF₃, -C₂F₅, -C₃F₇ or a C₁-C₆ per(halo)fluorooxyalkyl, possibly comprising halogen atoms different from F, having one or more ether groups, such as -C₂F₅-O-CF₃;
- per(halo)fluorodioxoles of formula : 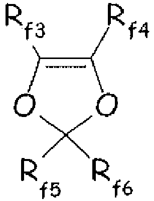
wherein each of R_{f3}, R_{f4}, R_{f5}, R_{f6}, equal of different each other, is independently a fluorine atom, a C₁-C₆ per(halo)fluoroalkyl group, optionally comprising one or more oxygen atom, possibly comprising halogen atoms different from F, e.g. -CF₃, -C₂F₅, -C₃F₇, -OCF₃, -OCF₂CF₂OCF₃; preferably a per(halo)fluorodioxole complying with formula here above, wherein R_{f3} and R_{f4} are fluorine atoms and R_{f5} and R_{f6} are perfluoromethyl groups (-CF₃) [perfluoro-2,2-dimethyl-1,3-dioxole (PDD)], or a per(halo)fluorodioxole complying with formula here above, wherein R_{f3}, R_{f5} and R_{f6} are fluorine atoms and R_{f4} is a perfluoromethoxy group (-OCF₃) [2,2,4-trifluoro-5-trifluoromethoxy-1,3-dioxole or perfluoromethoxydioxole (MDO)].

5. The fluoropolymer composition of claim 4, wherein the polymer (A) is selected from the group consisting of TFE copolymers comprising recurring units derived from hexafluoropropylene (HFP) and optionally from at least one perfluoroalkylvinylether complying with general formula CF₂=CFOR_{f1'} in which R_{f1'} is a C₁-C₆ perfluoroalkyl.

6. The fluoropolymer composition of claim 4, wherein the polymer (A) is selected from the group consisting of TFE copolymers comprising recurring units derived from at least one per(halo)fluoroalkylvinylethers complying with general formula CF₂=CFOR_{f1} in which R_{f1} is a C₁-C₆ per(halo)fluoroalkyl, possibly comprising one or more than one halogen atom different from F; and optionally further comprising recurring units derived from at least one C₃-C₈ perfluoroolefins.

7. The fluoropolymer composition of anyone of the preceding claims, wherein the polymer (P) is a mixture of at least one polyamideimide (PAI) and at least one aromatic sulfone polymer (SP),
- said polyamideimide (PAI) being a polymer comprising more than 50 % moles of recurring units comprising at least one aromatic ring, at least one imide group, as such and/or in its amic acid form, and at least one amide group which is not included in the amic acid form of an imide group [recurring units (R_{PAI})], said recurring units (R_{PAI}) being selected from the group consisting of: 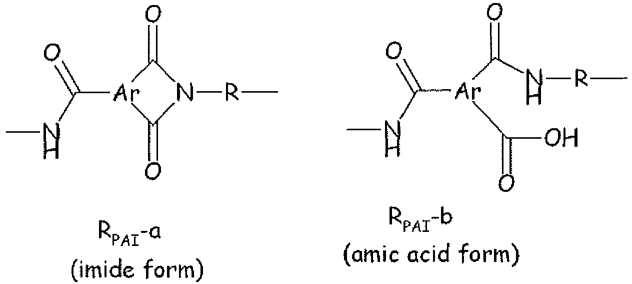 wherein :
- Ar is a trivalent aromatic group; typically Ar is selected from the group consisting of following structures: 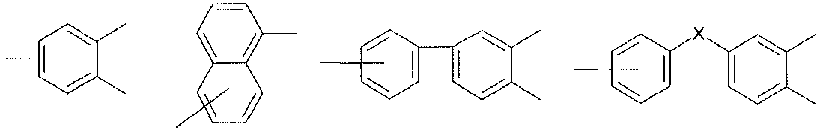 and corresponding optionally substituted structures, with X being -O-, -C(O)-,-CH₂-, -C(CF₃)₂-, -(CF₂)ₙ-, with n being an integer from 1 to 5;
- R is a divalent aromatic group; typically R is selected from the group consisting of following structures: 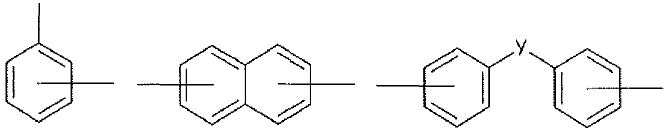 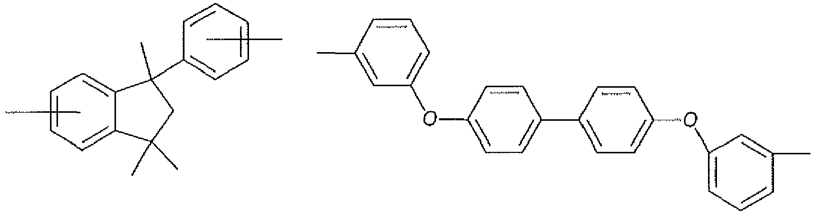 and corresponding optionally substituted structures, with Y being -O-, -S-, - SO₂-, -CH₂-, -C(O)-, -C(CF₃)₂-, -(CF₂)ₙ, n being an integer from 0 to 5; and
- said aromatic sulfone polymer (SP) being a polymer, at least 50 % moles of the recurring units thereof comprising at least one group of formula (SP) [recurring units (R_{SP})]:
- Ar-SO₂-Ar'- formula (SP)
wherein Ar and Ar', equal to or different from each other, being aromatic groups.

8. The fluoropolymer composition of claim 7, wherein the aromatic sulfone polymer (SP) is a polyethersulfone polymer the recurring units of which are recurring units (jjj) and, optionally in addition, recurring units (jj):

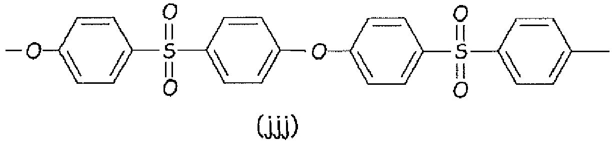

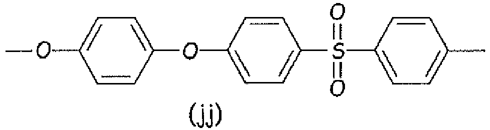

9. A process for manufacturing the fluoropolymer composition according to anyone of claims 1 to 8, comprising mixing the polymer (A), the polymer (P), the mixture (M) and, when present, all other additional ingredients.

10. A method for coating a surface, including a step of coating the composition according to anyone of claims 1 to 8 onto said surface, so as to obtained a wet coating layer onto said surface.

11. The method of claim 10, said method comprising a subsequent step of drying at temperatures ranging from room temperature to about 200°C, said wet coating layer, so as to obtain a dried coating layer onto said surface.

12. The method of claim 11, wherein said dried coating layer is further coated with an additional layer of a fluoropolymer, so as to provide an outer fluoropolymer layer assembled onto the dried coating layer onto the surface.

## Patentansprüche

1. Fluorpolymerzusammensetzung, umfassend :
- mindestens ein Fluorpolymer [Polymer (A)];
- mindestens ein aromatisches Polykondensationspolymer [Polymer (P)];
- eine Lösungsmittelmischung [Mischung (M)], umfassend Dimethylsulfoxid (DMSO) und mindestens ein Lösungsmittel aus der Gruppe bestehend aus Diestern der Formel (I_{de}) und Esteramiden der Formel (Iₑₐ) :
R¹-OOC-A_{de}-COO-R² (I_{de})
R¹-OOC-Aₑₐ-CO-NR³R⁴ (Iₑₐ)
wobei:
- R¹ und R² gleich oder voneinander verschieden sind und unabhängig voneinander aus der Gruppe bestehend aus C₁-C₂₀-Kohlenwasserstoffgruppen ausgewählt sind;
- R³ und R⁴ gleich oder voneinander verschieden sind und unabhängig voneinander aus der Gruppe bestehend aus Wasserstoff, gegebenenfalls substituierten C₁-C₃₆-Kohlenwasserstoffgruppen, mit der Maßgabe, dass R³ und R⁴ Teil einer cyclischen Gruppierung, die das Stickstoffatom, an das sie gebunden sind, enthält, sein können, wobei die cyclische Gruppierung gegebenenfalls substituiert ist und/oder gegebenenfalls ein oder mehr als ein zusätzliches Heteroatom umfasst, und Mischungen davon ausgewählt sind;
- A_{de} und Aₑₐ gleich oder voneinander verschieden sind und unabhängig voneinander für eine lineare oder verzweigte zweiwertige Alkylengruppe stehen,
wobei das Gewichtsverhältnis zwischen den Lösungsmitteln der Formel (I_{de}) und (Iₑₐ) und DMSO 70/30 bis 30/70 beträgt.

2. Fluorpolymerzusammensetzung nach Anspruch 1, wobei die Mischung (M) zusätzlich zu DMSO Folgendes umfasst:
(i) mindestens einen der Diester (I'_{de}) und mindestens einen Diester (I"_{de}), gegebenenfalls in Kombination mit mindestens einem Diester der Formel (II_{de}); oder
(ii) mindestens eines der Esteramide (I'ₑₐ) und mindestens ein Esteramid (I"ₑₐ), gegebenenfalls in Kombination mit mindestens einem Esteramid der Formel (IIₑₐ); oder
(iii) Kombinationen von (i) und (ii),
wobei :
- (I'_{de}) für R¹-OOC-A_{MG}-COO-R² steht, - (I'ₑₐ) für R¹-OOC-A_{MG}-CO-NR³R⁴ steht,
- (I"_{de}) für R¹-OOC-A_{ES}-COO-R² steht,
- (I"ₑₐ) für R¹-OOC-A_{ES}-CO-NR³R⁴ steht,
- (IIₑₐ) für R¹-OOC-(CH₂)₄-CO-NR³R⁴ steht und
- (II_{de}) für R¹-OOC-(CH₂)₄-COO-R² steht,
wobei:
- A_{MG} die Formel MGₐ-CH(CH₃)-CH₂-CH₂- oder MG_{b}-CH₂-CH₂-CH(CH₃)-aufweist,
- A_{ES} die Formel ESₐ-CH(C₂H₅)-CH₂- oder ES_{b}-CH₂-CH(C₂H₅)- aufweist; und wobei
- R¹ und R² gleich oder voneinander verschieden sind und unabhängig voneinander aus der Gruppe bestehend aus C₁-C₂₀-Alkyl-, C₁-C₂₀-Aryl-, C₁-C₂₀-Alkylaryl-, C₁-C₂₀-Arylalkylgruppen ausgewählt sind;
- R³ und R⁴ gleich oder voneinander verschieden sind und aus der Gruppe bestehend aus C₁-C₂₀-Alkyl-, C₁-C₂₀-Aryl-, C₁-C₂₀-Alkylaryl-, C₁-C₂₀-Arylalkylgruppen ausgewählt sind, wobei alle diese Gruppen gegebenenfalls einen oder mehr als einen Substituenten umfassen, gegebenenfalls ein oder mehr als ein Heteroatom aufweisen und bei cyclischen Gruppierungen, die sowohl R³ als auch R⁴ und das Stickstoffatom, an das sie gebunden sind, umfassen, die cyclischen Gruppierungen gegebenenfalls ein oder mehr als ein Heteroatom, z.B. ein Sauerstoffatom oder ein zusätzliches Stickstoffatom, umfassen.

3. Fluorpolymerzusammensetzung nach Anspruch 1, wobei die Mischung (M) zusätzlich zu DMSO Folgendes umfasst:
(k) mindestens einen der Diester (III⁴_{de}), mindestens einen Diester (III³_{de}) und mindestens einen Diester der Formel (III²_{de});
(kk) mindestens eines der Esteramide (III⁴ₑₐ), mindestens ein Esteramid (III³ₑₐ) und mindestens ein Esteramid der Formel (III²ₑₐ); oder
(kkk) Kombinationen von (k) und (kk),
wobei :
- (III⁴_{de}) für R¹-OOC-(CH₂)₄-COO-R² steht,
- (III³_{de}) für R¹-OOC-(CH₂)₃-COO-R² steht,
- (III²_{de}) für R¹-OOC-(CH₂)₂-COO-R² steht,
- (III⁴ₑₐ) für R¹-OOC-(CH₂)₄-CO-NR³R⁴ steht,
- (III³ₑₐ) für R¹-OOC-(CH₂)₃-CO-NR³R⁴ steht,
- (III²ₑₐ) für R¹-OOC-(CH₂)₂-CO-NR³R⁴ steht,
wobei R¹ und R² gleich oder voneinander verschieden sind und unabhängig voneinander für C₁-C₂₀-Alkyl-, C₁-C₂₀-Aryl-, C₁-C₂₀-Alkylaryl-, C₁-C₂₀-Arylalkylgruppen stehen;
- R³ und R⁴ gleich oder voneinander verschieden sind und aus der Gruppe bestehend aus C₁-C₂₀-Alkyl-, C₁-C₂₀-Aryl-, C₁-C₂₀-Alkylaryl-, C₁-C₂₀-Arylalkylgruppen ausgewählt sind, wobei alle diese Gruppen gegebenenfalls einen oder mehr als einen Substituenten umfassen, gegebenenfalls ein oder mehr als ein Heteroatom aufweisen und bei cyclischen Gruppierungen, die sowohl R³ als auch R⁴ und das Stickstoffatom, an das sie gebunden sind, umfassen, die cyclischen Gruppierungen gegebenenfalls ein oder mehr als ein Heteroatom, z.B. ein Sauerstoffatom oder ein zusätzliches Stickstoffatom, umfassen.

4. Fluorpolymerzusammensetzung nach einem der vorhergehenden Ansprüche, wobei es sich bei dem Polymer (A) um ein Per(halogen)fluorpolymer handelt, das aus der Gruppe bestehend aus Copolymeren von Tetrafluorethylen (TFE) mit mindestens einem von TFE verschiedenen Per(halogen)fluoimonomer (PFM) ausgewählt ist, wobei das Per(halogen)fluormonomer (PFM) aus der Gruppe bestehend aus :
- C₃-C₈-Perfluorolefinen, wie und Hexafluorpropen (HFP);
- C₂-C₆-Perhalogenfluorolefinen, die mindestens ein von Fluor verschiedenes Halogen, z.B. Cl, Br, I, umfassen; wie insbesondere Chlortrifluorethylen;
- Per(halogen)fluoralkylvinylethern der allgemeinen Formel CF₂=CFOR_{f1}, wobei R_{f1} für ein C₁-C₆-Per(halogen)fluoralkyl, das gegebenenfalls ein oder mehr als ein von F verschiedenes Halogenatom umfasst, steht; nicht einschränkende Beispiele für R_{f1} sind insbesondere -CF₃, -C₂F₅, -C₃F₇;
- Per(halogen)fluoroxyalkylvinylethern der allgemeinen Formel CF₂=CFOX₀₁, wobei X₀₁ für ein C₁-C₁₂-Per(halogen)fluoroxyalkyl, das gegebenenfalls von F verschiedene Halogenatome umfasst, mit einer oder mehreren Ethergruppen, wie insbesondere die Perfluor-2-propoxypropylgruppe, steht;
- Per(halogen)fluormethoxyalkylvinylethern der allgemeinen Formel CF₂=CFOCF₂OR_{f2}, wobei R_{f2} für ein C₁-C₆-Per(halogen)fluoralkyl, das gegebenenfalls von F verschiedene Halogenatome umfasst, wie -CF₃, -C₂F₅, -C₃F₇, oder ein C₁-C₆-Per(halogen)fluoroxyalkyl, das gegebenenfalls von F verschiedene Halogenatome umfasst, mit einer oder mehreren Ethergruppen, wie -C₂F₅-O-CF₃, steht;
- Per(halogen)fluordioxolen der Formel: 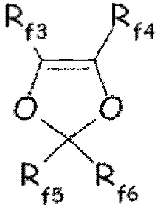 wobei R_{f3}, R_{f4}, R_{f5} und R_{f6} jeweils gleich oder verschieden sind und unabhängig voneinander für ein Fluoratom, eine C₁-C₆-Per-(halogen)fluoralkylgruppe, die gegebenenfalls ein oder mehrere Sauerstoffatome umfasst und gegebenenfalls von F verschiedene Halogenatome umfasst, z.B. -CF₃, -C₂F₅, -C₃F₇, -OCF₃, -OCF₂CF₂OCF₃, stehen; vorzugsweise einem Per(halogen)fluordioxol der obigen Formel, wobei R_{f3} und R_{f4} für Fluoratome stehen und R_{f5} und R_{f6} für Perfluormethylgruppen (-CF₃) stehen [Perfluor-2,2-dimethyl-1,3-dioxol (PDD)], oder einem Per(halogen)fluordioxol der obigen Formel, wobei R_{f3}, R_{f5} und R_{f6} für Fluoratome stehen und R_{f4} für eine Perfluormethoxygruppe (-OCF₃) steht [2,2,4-Trifluor-5-trifluormethoxy-1,3-dioxol oder Perfluormethoxydioxol (MDO)];
ausgewählt ist.

5. Fluorpolymerzusammensetzung nach Anspruch 4, wobei das Polymer (A) aus der Gruppe bestehend aus TFE-Copolymeren, die Wiederholungseinheiten, die sich von Hexafluorpropylen (HFP) und gegebenenfalls von mindestens einem Perfluoralkylvinylether der allgemeinen Formel CF₂=CFOR_{f1}, wobei R_{f1} für ein C₁-C₆-Perfluoralkyl steht, ableiten, umfassen, ausgewählt ist.

6. Fluorpolymerzusammensetzung nach Anspruch 4, wobei das Polymer (A) aus der Gruppe bestehend aus TFE-Copolymeren, die Wiederholungseinheiten, die sich von mindestens einem Per(halogen)fluoralkylvinylether der allgemeinen Formel CF₂=CFOR_{f1}, wobei R_{f1} für ein C₁-C₆-Per(halogen)fluoralkyl, das gegebenenfalls ein oder mehr als ein von F verschiedenes Halogenatom umfasst, steht, ableiten, und gegebenenfalls ferner Wiederholungseinheiten, die sich von mindestens einem C₃-C₈-Perfluorolefin ableiten, umfassen, ausgewählt ist.

7. Fluorpolymerzusammensetzung nach einem der vorhergehenden Ansprüche, wobei es sich bei dem Polymer (P) um eine Mischung von mindestens einem Polyamidimid (PAI) und mindestens einem aromatischen Sulfonpolymer (SP) handelt,
- wobei es sich bei dem Polyamidimid (PAI) um ein Polymer handelt, das mehr als 50 Mol- % Wiederholungseinheiten umfasst, die mindestens einen aromatischen Ring, mindestens eine Imidgruppe als solche und/oder in ihrer Amidsäure-Form und mindestens eine Amidgruppe, die nicht in der Amidsäure-Form einer Imidgruppe enthalten ist, umfassen, [Wiederholungseinheiten (R_{PAI})], wobei die Wiederholungseinheiten (R_{PAI}) ausgewählt werden aus der Gruppe bestehend aus : 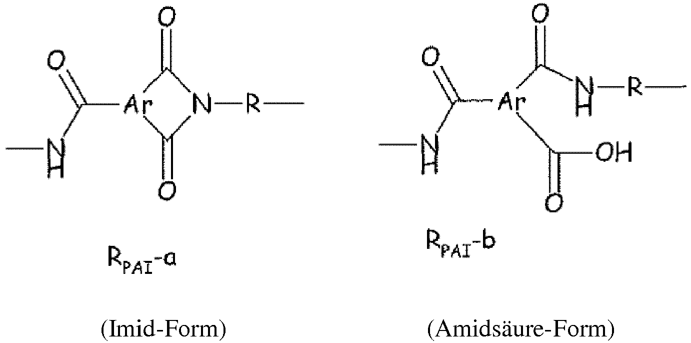 wobei:
- Ar für eine dreiwertige aromatische Gruppe steht; Ar typischerweise aus der Gruppe bestehend aus den folgenden Strukturen : 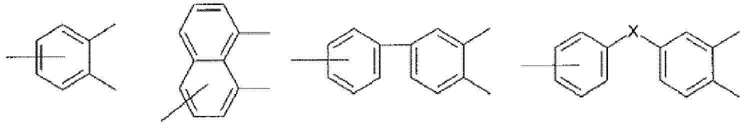 und entsprechenden gegebenenfalls substituierten Strukturen ausgewählt ist, wobei X für -O-, -C(O)-, -CH₂-, -C(CF₃)₂-, -(CF₂)ₙ- steht, wobei n für eine ganze Zahl von 1 bis 5 steht;
- R für eine zweiwertige aromatische Gruppe steht; R typischerweise aus der Gruppe bestehend aus den folgenden Strukturen : 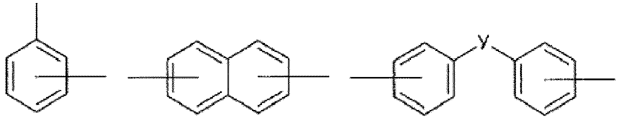 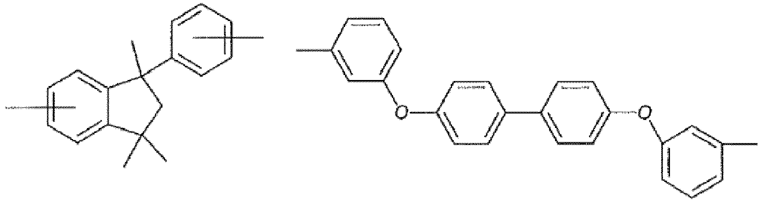 und entsprechenden gegebenenfalls substituierten Strukturen ausgewählt ist, wobei Y für -O-, -S-, -SO₂-, -CH₂-, -C(O)-, -C(CF₃)₂-, -(CF₂)ₙ steht, wobei n für eine ganze Zahl von 0 bis 5 steht; und
- es sich bei dem aromatischen Sulfonpolymer (SP) um ein Polymer handelt, wobei mindestens 50 Mol- % der Wiederholungseinheiten davon mindestens eine Gruppe der Formel (SP) umfassen [Wiederholungseinheiten (R_{SP})] :
Ar-SO₂-Ar'- Formel (SP)
wobei Ar und Ar' gleich oder voneinander verschieden sind und für aromatische Gruppen stehen.

8. Fluorpolymerzusammensetzung nach Anspruch 7, wobei es sich bei dem aromatischen Sulfonpolymer (SP) um ein Polyethersulfon-Polymer handelt, bei dessen Wiederholungseinheiten es sich um Wiederholungseinheiten (jjj) und gegebenenfalls zusätzlich Wiederholungseinheiten (jj) handelt :

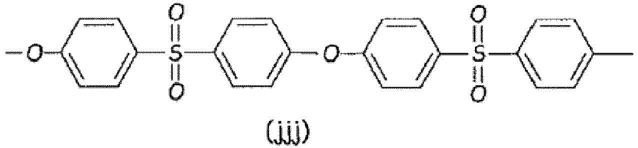

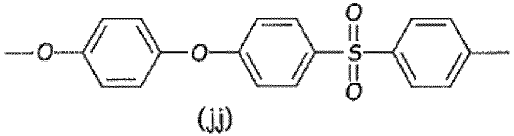

9. Verfahren zur Herstellung der Fluorpolymerzusammensetzung nach einem der Ansprüche 1 bis 8, bei dem man das Polymer (A), das Polymer (P), die Mischung (M) und, sofern vorhanden, alle anderen zusätzlichen Bestandteile mischt.

10. Verfahren zum Beschichten einer Oberfläche mit einem Schritt des Auftragens der Zusammensetzung nach einem der Ansprüche 1 bis 8 auf die Oberfläche zum Erhalt einer nassen Beschichtungsschicht auf der Oberfläche.

11. Verfahren nach Anspruch 10, wobei das Verfahren einen nachfolgenden Schritt des Trocknens der nassen Beschichtungsschicht bei Temperaturen im Bereich von Raumtemperatur bis etwa 200°C zum Erhalt einer getrockneten Beschichtungsschicht auf der Oberfläche umfasst.

12. Verfahren nach Anspruch 11, bei dem die getrocknete Beschichtungsschicht ferner mit einer zusätzlichen Schicht aus einem Fluorpolymer beschichtet wird, wodurch eine auf der getrockneten Beschichtungsschicht auf der Oberfläche angeordnete äußere Fluorpolymerschicht bereitgestellt wird.

## Revendications

1. Composition de fluoropolymère comprenant :
- au moins un fluoropolymère [polymère (A)] ;
- au moins un polymère de polycondensation aromatique [polymère (P)] ;
- un mélange de solvants [mélange (M)] comprenant du diméthylsulfoxyde (DMSO) et au moins un solvant choisi dans le groupe constitué par les diesters de formule (I_{de}) et un ester-amide de formule (Iₑₐ) :
R¹-OOC-A_{de}-COO-R² (I_{de})
R¹-OOC-Aₑₐ-CO-NR³R⁴ (Iₑₐ)
dans lesquelles :
- R¹ et R², identiques ou différents l'un de l'autre, sont choisis indépendamment dans le groupe constitué par les groupes hydrocarbonés en C₁-C₂₀ ;
- R³ et R⁴, identiques ou différents l'un de l'autre, sont choisis indépendamment dans le groupe constitué par l'hydrogène, les groupes hydrocarbonés en C₁-C₃₆, éventuellement substitués, R³ et R⁴ pouvant faire partie d'une fraction cyclique comprenant l'atome d'azote auquel ils sont reliés, ladite fraction cyclique étant éventuellement substituée et/ou comprenant éventuellement un ou plus d'un hétéroatome supplémentaire, et leurs mélanges ;
- A_{de} et Aₑₐ, identiques ou différents l'un de l'autre, sont indépendamment un groupe alkylène bivalent linéaire ou ramifié,
le rapport en poids entre les solvants de formule (I_{de}) et (Iₑₐ) et le DMSO étant de 70/30 à 30/70.

2. Composition de fluoropolymère selon la revendication 1, dans laquelle le mélange (M) comprend, en plus du DMSO :
(i) au moins un diester (I'_{de}) et au moins un diester (I"_{de}), éventuellement en combinaison avec au moins un diester de formule (II_{de}) ; ou
(ii) au moins un ester-amide (I'ₑₐ) et au moins un ester-amide (I" ₑₐ), éventuellement en combinaison avec au moins un ester-amide de formule (IIₑₐ) ; ou
(iii) des combinaisons de (i) et (ii),
- (I'_{de}) représentant R¹-OOC-A_{MG}-COO-R²
- (I'ₑₐ) représentant R¹-OOC-A_{MG}-CO-NR³R⁴
- (I"_{de}) représentant R¹-OOC-A_{ES}-COO-R² - (I"ₑₐ) représentant R¹-OOC-A_{ES}-CO-NR³R⁴
- (IIₑₐ) représentant R¹-OOC-(CH₂)₄-CO-NR³R⁴; et
- (II_{de}) représentant R¹-OOC-(CH₂)₄-COO-R²,
dans lesquelles :
- A_{MG} est de formule MGₐ-CH(CH₃)-CH₂-CH₂ ou MG_{b}-CH₂-CH₂-CH(CH₃)-,
- A_{ES} est de formule ESₐ-CH(C₂H₅)-CH₂- ou ES_{b}-CH₂-CH(C₂H₅)- ; et dans lesquelles
- R¹ et R², identiques ou différents l'un de l'autre, sont choisis indépendamment dans le groupe constitué par les groupes alkyle en C₁-C₂₀, aryle en C₁-C₂₀, alkylaryle en C₁-C₂₀, arylalkyle en C₁-C₂₀ ;
- R³ et R⁴, identiques ou différents l'un de l'autre, sont choisis dans le groupe constitué par les groupes alkyle en C₁-C₂₀, aryle en C₁-C₂₀, alkylaryle en C₁-C₂₀, arylalkyle en C₁-C₂₀, tous lesdits groupes comprenant éventuellement un ou plus d'un substituant, comprenant éventuellement un ou plus d'un hétéroatome, et les fractions cycliques comprenant à la fois R³ et R⁴ et l'atome d'azote auquel ils sont reliés, lesdites fractions cycliques comprenant éventuellement un ou plus d'un hétéroatome, p. ex. un atome d'oxygène ou un atome d'azote supplémentaire.

3. Composition de fluoropolymère selon la revendication 1, dans laquelle le mélange (M) comprend, en plus du DMSO :
(k) au moins un diester (III⁴_{de}), au moins un diester (III³_{de}) et au moins un diester de formule (III²_{de}) ;
(kk) au moins un ester-amide (III⁴ₑₐ), au moins un ester-amide (III³ₑₐ) et au moins un ester-amide de formule (III²ₑₐ) ; ou
(kkk) des combinaisons de (k) et (kk),
- (III⁴_{de}) représentant R¹-OOC-(CH₂)₄-COO-R²
- (III³_{de}) représentant R¹-OOC-(CH₂)₃-COO-R²
- (III²_{de}) représentant R¹-OOC-(CH₂)₂-COO-R²
- (III⁴ₑₐ) représentant R¹-OOC-(CH₂)₄-CO-NR³R⁴
- (III³ₑₐ) représentant R¹-OOC-(CH₂)₃-CO-NR³R⁴
- (III²ₑₐ) représentant R¹-OOC-(CH₂)₂-CO-NR³R⁴
R¹ et R², identiques ou différents l'un de l'autre, étant indépendamment des groupes alkyle en C₁-C₂₀, aryle en C₁-C₂₀, alkylaryle en C₁-C₂₀, arylalkyle en C₁-C₂₀ ;
- R³ et R⁴, identiques ou différents l'un de l'autre, étant choisis dans le groupe constitué par les groupes alkyle en C₁-C₂₀, aryle en C₁-C₂₀, alkylaryle en C₁-C₂₀, arylalkyle en C₁-C₂₀, tous lesdits groupes comprenant éventuellement un ou plus d'un substituant, comprenant éventuellement un ou plus d'un hétéroatome, et les fractions cycliques comprenant à la fois R³ et R⁴ et l'atome d'azote auquel ils sont reliés, lesdites fractions cycliques comprenant éventuellement un ou plus d'un hétéroatome, p. ex. un atome d'oxygène ou un atome d'azote supplémentaire.

4. Composition de fluoropolymère selon l'une quelconque des revendications précédentes, dans laquelle le polymère (A) est un per(halo)fluoropolymère choisi dans le groupe constitué par les copolymères de tétrafluoroéthylène (TFE) avec au moins un per(halo)fluoromonomère (PFM) différent de TFE, ledit per(halo)fluoromonomère (PFM) étant choisi dans le groupe constitué par :
- les perfluorooléfines en C₃-C₈, telles que l'hexafluoropropène (HFP) ;
- les perhalofluorooléfines en C₂-C₆ comprenant au moins un halogène différent du fluor, p. ex. Cl, Br, I ; telles que notamment le chlorotrifluoroéthylène ;
- les éthers per(halo)fluoroalkylvinyliques de formule générale CF₂=CFOR_{f1} dans laquelle R_{f1} est un per(halo)fluoroalkyle en C₁-C₆, comprenant éventuellement un ou plus d'un atome d'halogène différent de F ; des exemples non limitatifs de R_{f1} étant notamment -CF₃, -C₂F₅, -C₃F₇ ;
- les éthers per(halo)fluoro-oxyalkylvinyliques de formule générale CF₂=CFOX₀₁, dans laquelle X₀₁ est un per(halo)fluorooxyalkyle en C₁-C₁₂ comprenant éventuellement des atomes d'halogène différents de F, comprenant un ou plusieurs groupes éther, tels que notamment le groupe perfluoro-2-propoxy-propyle ;
- les éthers per(halo)fluoro-méthoxy-alkylvinyliques de formule générale CF₂=CFOCF₂OR_{f2}, dans laquelle R_{f2} est un per(halo)fluoroalkyle en C₁-C₆, comprenant éventuellement des atomes d'halogène différents de F, tels que -CF₃, -C₂F₅, -C₃F₇ ou un per(halo)fluorooxyalkyle en C₁-C₆, comprenant éventuellement des atomes d'halogène différents de F, comprenant un ou plusieurs groupes éther, tels que -C₂F₅-O-CF₃ ;
- les per(halo)fluorodioxoles de formule : 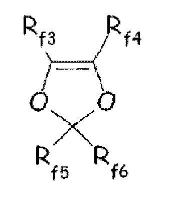 dans laquelle R_{f3}, R_{f4}, R_{f5}, R_{f6}, identiques ou différents les uns des autres, sont chacun indépendamment un atome de fluor, un groupe per(halo)fluoroalkyle en C₁-C₆, comprenant éventuellement un ou plusieurs atomes d'oxygène, comprenant éventuellement des atomes d'halogène différents de F, p. ex. -CF₃, -C₂F₅, -C₃F₇, -OCF₃, -OCF₂CF₂OCF₃ ; de préférence un per(halo)fluorodioxole ayant la formule indiquée précédemment, dans laquelle R_{f3} et R_{f4} sont des atomes de fluor et R_{f5} et R_{f6} sont des groupes perfluorométhyle (-CF₃) [perfluoro-2,2-diméthyl-1,3-dioxole (PDD)], ou un per(halo)fluorodioxole ayant la formule indiquée précédemment, dans laquelle R_{f3}, R_{f5} et R_{f6} sont des atomes de fluor et R_{f4} est un groupe perfluorométhoxy (-OCF₃) [2,2,4-trifluoro-5-trifluorométhoxy-1,3-dioxole ou perfluorométhoxydioxole (MDO)].

5. Composition de fluoropolymère selon la revendication 4, dans laquelle le polymère (A) est choisi dans le groupe constitué par les copolymères de TFE comprenant des unités de répétition dérivées d'hexafluoropropylène (HFP) et éventuellement d'au moins un éther perfluoroalkylvinylique de formule générale CF₂=CFOR_{f1'} dans laquelle R_{f1'} est un perfluoroalkyle en C₁-C₆.

6. Composition de fluoropolymère selon la revendication 4, dans laquelle le polymère (A) est choisi dans le groupe constitué par les copolymères de TFE comprenant des unités de répétition dérivées d'au moins un éther per(halo)fluoroalkylvinylique de formule générale CF₂=CFOR_{f1}, dans laquelle R_{f1} est un per(halo)fluoroalkyle en C₁-C₆, comprenant éventuellement un ou plus d'un atome d'halogène différent de F ; et comprenant éventuellement en outre des unités de répétition dérivées d'au moins une perfluorooléfine en C₃-C₈.

7. Composition de fluoropolymère selon l'une quelconque des revendications précédentes, dans laquelle le polymère (P) est un mélange d'au moins un polyamide-imide (PAI) et d'au moins un polymère de sulfone aromatique (SP),
- ledit polyamide-imide (PAI) étant un polymère qui comprend plus de 50 % en moles d'unités de répétition comprenant au moins un cycle aromatique, au moins un groupe imide, tel quel et/ou sous sa forme acide amique, et au moins un groupe amide qui n'est pas inclus dans la forme acide amique d'un groupe imide [unités de répétition (R_{PAI})], lesdites unités de répétition (R_{PAI}) étant choisies dans le groupe constitué par : 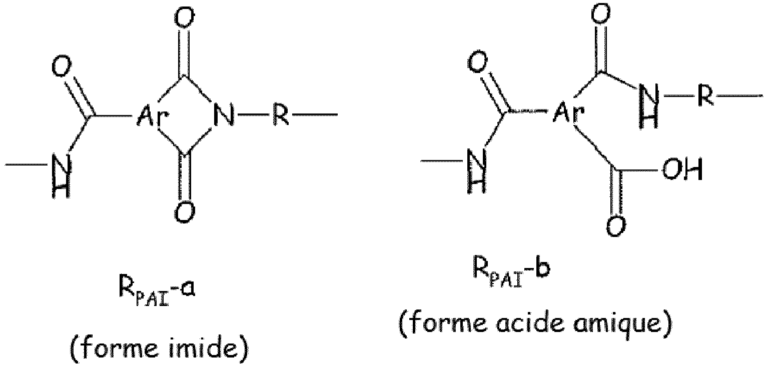 dans lesquelles :
- Ar est un groupe aromatique trivalent ; Ar est généralement choisi dans le groupe constitué par les structures suivantes : 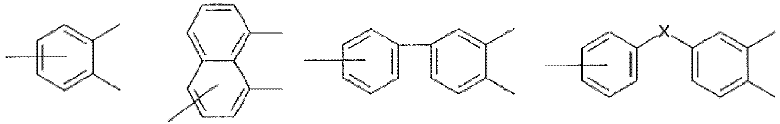 et les structures éventuellement substituées correspondantes, X représentant -O-, -C(O)-, -CH₂-, -C(CF₃)₂-, -(CF₂)ₙ-, n étant un entier de 1 à 5 ;
- R est un groupe aromatique bivalent ; R est généralement choisi dans le groupe constitué par les structures suivantes : 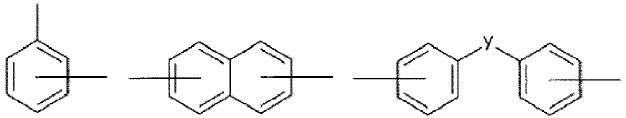 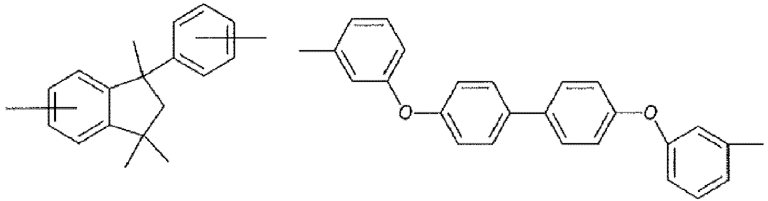 et les structures éventuellement substituées correspondantes, Y représentant -O-, -S-, -SO-, -CH₂-, -C(O)-, -C(CF₃)₂-, -(CF₂)ₙ-, n étant un entier de 0 à 5 ; et
- ledit polymère de sulfone aromatique (SP) étant un polymère dont au moins 50 % en moles des unités de répétition comprennent au moins un groupe de formule (SP) [unités de répétition (R_{SP})] :
-Ar-SO₂-Ar' (formule (SP)
dans laquelle Ar et Ar', identiques ou différents l'un de l'autre, sont des groupes aromatiques.

8. Composition de fluoropolymère selon la revendication 7, dans laquelle le polymère de sulfone aromatique (SP) est un polymère de polyéthersulfone dont les unités de répétition sont des unités de répétition (jjj) et, éventuellement en outre, des unités de répétition (jj) :

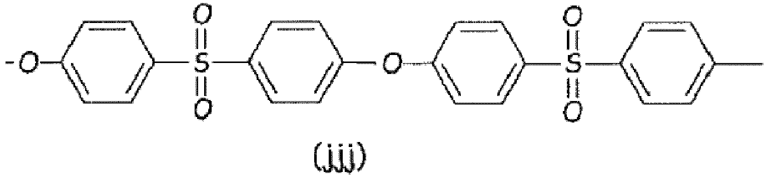

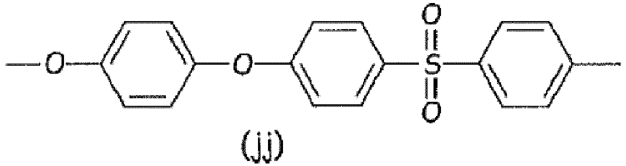

9. Procédé de fabrication de la composition de fluoropolymère selon l'une quelconque des revendications 1 à 8, comprenant le mélange du polymère (A), du polymère (P), du mélange (M) et, lorsqu'ils sont présents, de tous les autres ingrédients supplémentaires.

10. Procédé de revêtement d'une surface, comprenant une étape de revêtement de la composition selon l'une quelconque des revendications 1 à 8 sur ladite surface afin d'obtenir une couche de revêtement humide sur ladite surface.

11. Procédé selon la revendication 10, ledit procédé comprenant une étape ultérieure de séchage, à des températures allant de la température ambiante à environ 200°C, de ladite couche de revêtement humide, afin d'obtenir une couche de revêtement séchée sur ladite surface.

12. Procédé selon la revendication 11, dans lequel ladite couche de revêtement séchée est encore revêtue avec une couche supplémentaire d'un fluoropolymère, afin d'obtenir une couche de fluoropolymère extérieure assemblée sur la couche de revêtement séchée sur la surface.
